# EUROPEAN PATENT SPECIFICATION

(11) **EP 4 292 382 B1**
(45) Date of publication and mention of the grant of the patent: **01.01.2025**
(21) Application number: 22711366.9
(22) Date of filing: 25.02.2022
(51) Int. Cl.: H04W 76/15, H04W 88/06, H04W 8/22, H04W 8/24

(54) **DEACTIVATING OR RELEASING A SECONDARY CELL GROUP IN DUAL CONNECTIVITY**
DEAKTIVIEREN ODER FREIGEBEN EINER SEKUNDÄREN ZELLENGRUPPE BEI DOPPELKONNEKTIVITÄT
DÉSACTIVATION OU LIBÉRATION D'UN GROUPE CELLULAIRE SECONDAIRE EN DOUBLE CONNECTIVITÉ

(30) Priority: 26.02.2021 US 202163154093 P
(43) Date of publication of application: 20.12.2023
(73) Proprietor: Google LLC, Mountain View, CA 94043 (US)
(72) Inventor: WU, Chih-Hsiang, Mountain View, CA 94043 (US)
(74) Representative: Marks & Clerk GST
(86) International application number: PCT/US2022/017803
(87) International publication number: WO 2022/182931

(56) References cited:
- "3rd Generation Partnership Project; Technical Specification Group Radio Access Network; Evolved Universal Terrestrial Radio Access (E-UTRA) and NR; Multi-connectivity; Stage 2 (Release 16)", vol. RAN WG2, no. V16.4.0, 6 January 2021 (2021-01-06), pages 1 - 84, XP051999626, Retrieved from the Internet <URL:https://ftp.3gpp.org/Specs/archive/37_series/37.340/37340-g40.zip 37340-g40.docx> [retrieved on 20210106]
- LENOVO ET AL: "General issues on SCG activation and deactivation", vol. RAN WG2, no. Online; 20210125 - 20210205, 15 January 2021 (2021-01-15), XP051974118, Retrieved from the Internet <URL:https://ftp.3gpp.org/tsg_ran/WG2_RL2/TSGR2_113-e/Docs/R2-2101121.zip R2-2101121 General issues on SCG activation and deactivation.docx> [retrieved on 20210115]

## Description

### TECHNICAL FIELD

This disclosure relates generally to deactivating or releasing a secondary cell group (SCG).

### BACKGROUND

This background description is provided for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

A user device (or user equipment, commonly denoted by the acronym "UE") in some cases can concurrently utilize resources of multiple network nodes, e.g., base stations, interconnected by a backhaul. When these network nodes support the same radio access technology (RAT) or different RATs, this type of connectivity is referred to as Dual Connectivity (DC) or Multi-Radio DC (MR-DC), respectively. Typically, when a UE operates in DC or MR-DC, one base station operates as a master node (MN), and the other base station operates as a secondary node (SN). The backhaul can support an X2 or Xn interface, for example.

The MN can provide a control-plane connection and a user-plane connection to a core network (CN), whereas the SN generally provides only a user-plane connection. The cells associated with the MN define a master cell group (MCG), and the cells associated with the SN define a secondary cell group (SCG). The UE and the base stations MN and SN can use signaling radio bearers (SRBs) to exchange radio resource control (RRC) messages, as well as non-access stratum (NAS) messages.

There are several types of SRBs that a UE can use when operating in DC. SRB1 and SRB2 resources allow the UE and the MN to exchange RRC messages related to the MN and to embed RRC messages related to the SN, and can be referred to as MCG SRBs. SRB3 resources allow the UE and the SN to exchange RRC messages related to the SN, and can be referred to as an SCG SRB. Split SRBs allow the UE to exchange RRC messages directly with the MN using radio resources of the MN, the SN, or both the MN and SN. Further, the UE and the base stations (e.g., MN and SN) use data radio bearers (DRBs) to transport data on a user plane. DRBs terminated at the MN and using the lower-layer resources of only the MN can be referred to as MCG DRBs, DRBs terminated at the SN and using the lower-layer resources of only the SN can be referred to as SCG DRBs, and DRBs terminated at the MN or SN but using the lower-layer resources of both the MN and the SN can be referred to as split DRBs. DRBs terminated at the MN but using the lower-layer resources of only the SN can be referred to as MN-terminated SCG DRBs. DRBs terminated at the SN but using the lower-layer resources of only the MN can be referred to as SN-terminated MCG DRBs.

Operating in DC with the MN and the SN places high power demands on the UE. Further, the amount of data that the UE has to exchange with the SN varies with time. For example, at a first time, the UE may not have data to exchange with the SN. As a result, the UE may be consuming large amounts of power to support a link with the SN that the UE is not actively using. However, a short time later, the UE may have data to exchange with the SN. Thus, it may be inefficient for the RAN to release the SN while there is low data activity for the UE, because resumption of the released SN may soon be requested.

One way to address this inefficiency is for the UE and the RAN to deactivate the SCG, which causes the SN and the UE to suspend communications over the SCG without releasing the SCG. However, some UEs may not support SCG deactivation. If the RAN instructs a UE that does not support SCG deactivation to deactivate the SCG, the UE will be unable to comply with the instruction. Further, the UE may be unable to interpret the instruction from the RAN, which may cause the UE to unnecessarily trigger an RRC connection reestablishment procedure.

Further, even in scenarios where a UE does support SCG deactivation, it is not clear how the RAN is to determine whether to deactivate the SCG or release the SCG.

"3rd Generation Partnership Project; Technical Specification Group Radio Access Network; Evolved Universal Terrestrial Radio Access (E-UTRA) and NR; Multi-connectivity; Stage 2 (Release 16)", vol. RAN WG2, no. V16.4.0, (20210106), pages 1 - 84, 3GPP STANDARD; TECHNICAL SPECIFICATION; 3GPP TS 37.340, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE provides an overview of the multi-connectivity operation using E-UTRA and NR radio access technologies.

LENOVO ET AL, "General issues on SCG activation and deactivation", vol. RAN WG2, no. Online; 20210125 - 20210205, (20210115), 3GPP DRAFT; R2-2101121, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE describes issues related to UE behaviour when SCG is deactivated.

### SUMMARY

The invention is defined in the independent claims 1, 10, 11 and 15.

Network nodes of a RAN and/or a UE can use the techniques of this disclosure to manage SCG deactivation. For example, as described above, the RAN may be unaware of whether the UE supports SCG deactivation (and/or activation). Accordingly, the UE can transmit capability information to the RAN that indicates whether the UE supports SCG deactivation. The capability information may explicitly indicate that the UE supports SCG deactivation and SCG activation, or the RAN may determine that the UE supports SCG activation based on the UE's support of SCG deactivation.

In some scenarios, the MN and the SN may communicate with the UE via different RATs. For example, in (NG)EN-DC, the MN may be an MeNB or Mng-eNB supporting a 4G LTE RAT and the SN may be an SgNB supporting a 5G NR RAT. In such scenarios, if the UE sends a single capability information element (IE) formatted in accordance with a particular RAT, either the MN or the SN may be unable to interpret the IE. For example, the UE can indicate support of SCG deactivation in a *UE-EUTRA-Capability* IE in a EUTRA RRC ASN.1 format. However, even if the MN receives and forwards this IE to the SN, the SN will be unable to interpret the *UE-EUTRA-Capability* IE because a gNB is unable to interpret the EUTRA RRC ASN.1 message. The SN will therefore be unable to initiate SCG deactivation for the UE. Similarly, if the UE were to indicate support of SCG deactivation in a *UE-MRDC-Capability* IE in a NR RRC ASN.1 format, then the MN will be unable to interpret the IE and will be unable to initiate SCG deactivation.

Accordingly, depending on the scenario, the UE can transmit capability information to the RAN including (i) a single capability IE indicating whether the UE supports SCG deactivation (e.g., a *NR-MRDC-Capability* IE if both the MN and the SN are gNBs), or (ii) two capability IEs formatted in accordance with two RATs, respectively (e.g., a *UE-EUTRA-Capability* IE and a *NR-MRDC-Capability* IE). The MN or the SN can therefore identify, based on the capability information, whether the UE supports deactivation.

If a network node of the RAN (e.g., the MN or the SN) determines that a condition is satisfied for deactivating the SCG, the network node can determine whether the capability information for the UE indicates that the UE supports deactivating the SCG. The network node may receive the capability information from the UE, another base station, or the CN. For example, if the network node is the SN, the network node may receive the capability information from the MN. The MN may forward capability information to the SN that is readable by the SN (e.g., a *NR-MRDC-Capability* IE if the SN is a gNB).

In scenarios in which the UE supports deactivating the SCG, the network node causes the SN to deactivate the SCG. Alternatively, in scenarios in which the UE does not support deactivating the SCG, the network node causes the SN to release the SCG. If the network node is the SN, and the UE supports deactivating the SCG, the SN can either deactivate or release the SCG at the SN. The SN can transmit a message to the MN informing the MN of the SCG deactivation or release and including an indication that the UE should deactivate or release the SCG, which the MN can send to the UE. If the network node is the MN, the MN can send a request to the SN to deactivate or to release the SCG, and can send an instruction to the UE to deactivate or release the SCG.

While the examples discussed below primarily refer to deactivating the SCG, a UE and/or a RAN can use similar techniques to determine whether to activate an SCG. For example, a network node can detect that a condition is satisfied for activating the SCG (e.g., by detecting that data activity exists on the SCG for the UE). In response, the network node can determine whether capability information for a UE indicates that the UE supports activating the SCG. If so, then the network node can cause the SN to activate the SCG. Otherwise, the network node refrains from activating the SCG. Instead of activating the SCG, the network node can perform an SN addition procedure, for example.

One example embodiment of these techniques is a method in a network node of a RAN, communicating with a UE in DC with an MN and an SN, for managing deactivation of a secondary cell group (SCG). The method can be executed by processing hardware and includes detecting that a condition for deactivating the SCG is satisfied. The method further includes determining whether the UE supports deactivating the SCG, and causing the SN to deactivate or to release the SCG at the SN based on the determining.

Another example embodiment of these techniques is a network node including processing hardware and configured to implement the method above.

A further example embodiment of these techniques is a method in a UE, communicating in dual connectivity (DC) with a radio access network (RAN) via a master node (MN) and a secondary node (SN), for managing deactivation and activation of a secondary cell group (SCG). The method can be executed by processing hardware and includes providing, to the RAN, capability information that indicates whether the UE supports deactivating the SCG. The method also includes receiving, from the RAN, an indication that the UE is to deactivate or to release the SCG, and deactivating or releasing the SCG at the UE in accordance with the indication.

A yet further example embodiment of these techniques is a UE including processing hardware and configured to implement the method above.

### BRIEF DESCRIPTION OF THE DRAWINGS

In the following, fig. 1A-2 are example block diagrams of devices and protocol stacks for implementing the example methods of fig. 3A-5B, 10-13 and 18, and fig. 7-9 and 12-17 are example methods used in conjunction with the example methods of fig. 3A-5B, 10-13 and 18.
Fig. 1A is a block diagram of an example wireless communication system in which one or more base stations and/or a user equipment (UE) can implement the techniques of this disclosure for deactivating and activating an SCG between the UE and an SN;
Fig. 1B is another block diagram of an example system in which a radio access network (RAN) and a UE can implement the techniques of this disclosure for deactivating and activating an SCG related to an SN;
Fig. 1C is a block diagram of an example base station including a central unit (CU) and a distributed unit (DU) that can operate in the system of Fig. 1A or Fig. 1B;
Fig. 2 is a block diagram of an example protocol stack according to which the UE of Fig. 1A or Fig. 1B can communicate with base stations;
Fig. 3A is an example message sequence in which a master node (MN) causes a secondary node (SN) to deactivate or release an SCG for a UE;
Figs. 3B-3C are example message sequences in which an SN deactivates or releases an SCG for a UE;
Fig. 3D is an example message sequence in which an MN receives an RRC resume request message and causes an SN to deactivate or release an SCG for a UE in response to the message;
Fig. 4A is an example message sequence similar to the message sequence of Fig. 3B, but where a CU of the SN determines whether to deactivate or to release the SCG;
Fig. 4B is an example message sequence similar to the message sequence of Fig. 3B, but where a DU of the SN determines whether to deactivate or to release the SCG;
Fig. 5A is an example message sequence similar to the message sequence of Fig. 4A, but where portions of a single base station serve as the MN and the SN;
Fig. 5B is an example message sequence similar to the message sequence of Fig. 4B, but where portions of a single base station serve as the MN and the SN;
Fig. 6A-6B are flow diagrams of example methods for requesting SCG deactivation or activation, which can be implemented by a UE;
Fig. 7 is a flow diagram of an example method for transmitting, to a RAN, (i) a first UE SCG deactivation capability readable by the MN (ii) a second UE SCG deactivation capability readable by the SN, which can be implemented by a UE;
Fig. 8 is a flow diagram of an example method for transmitting, to a RAN, a UE SCG deactivation capability readable by both an MN and an SN, which can be implemented by a UE;
Fig. 9 is a flow diagram of an example method for transmitting, to a RAN, a UE SCG deactivation capability indicating whether the UE supports SCG deactivation for different DC frequency band combinations;
Fig. 10 is a flow diagram of an example method for determining whether to cause an SN to deactivate or release an SCG, which can be implemented by an MN;
Fig. 11 is a flow diagram of an example method for determining whether to deactivate or release an SCG, which can be implemented by an SN;
Fig. 12 is a flow diagram of an example method for determining whether to cause a DU of an SN to deactivate or release an SCG, which can be implemented by a CU of an SN;
Fig. 13 is a flow diagram of an example method for determining whether to deactivate or release an SCG, which can be implemented by a DU of an SN;
Fig. 14 is a flow diagram of an example method for deactivating and releasing a cell group (CG), which can be implemented by a RAN;
Fig. 15 is a flow diagram of an example method for deactivating an SCG, which can be implemented by an SN;
Fig. 16A is a flow diagram of an example method for determining whether to reactivate an SCG in response to a CN-to-BS interface message, which can be implemented by a RAN;
Fig. 16B is a flow diagram of an example method for determining whether to reactivate an SCG in response to receiving a data packet from a CN, which can be implemented by a RAN;
Fig. 17 is a flow diagram of an example method for determining whether to reactivate an SCG in response to an RRC resume request message, which can be implemented by an MN;
Fig. 18 is a flow diagram of an example method for managing deactivation of an SCG, which can be implemented by a network node of Figs. 1A-1C; and
Fig. 19 is a flow diagram of an example method for managing deactivation of an SCG, which can be implemented by a UE of Figs. 1A-1B.

### DETAILED DESCRIPTION OF THE DRAWINGS

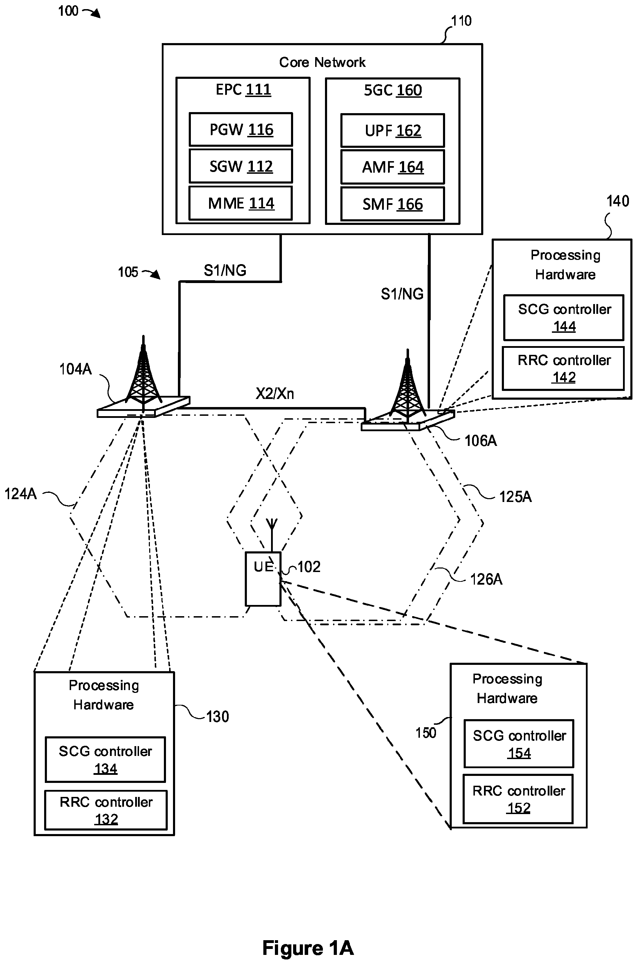

As discussed in detail below, network nodes of a radio access network (RAN) in communication with a UE can implement the techniques disclosed herein to manage multi-radio dual connectivity (MR-DC) in scenarios involving distributed base station architectures and scenarios involving suspending and resuming dual connectivity, for example. Prior to discussing these techniques, example communication systems which can implement these techniques are considered with reference to Figs. 1A-1B.

Fig. 1A depicts an example wireless communication system 100 that includes a UE 102, a base station (BS) 104A, a base station 106A, and a core network (CN) 110. The base stations 104A and 106A can operate in a RAN 105 connected to the same core network (CN) 110. The CN 110 can be implemented as an evolved packet core (EPC) 111 or a fifth generation (5G) core (5GC) 160, for example.

Among other components, the EPC 111 can include a Serving Gateway (SGW) 112, a Mobility Management Entity (MME) 114, and a Packet Data Network Gateway (PGW) 116. The SGW 112 in general is configured to transfer user-plane packets related to audio calls, video calls, Internet traffic, etc., and the MME 114 is configured to manage authentication, registration, paging, and other related functions. The PGW 116 provides connectivity from the UE to one or more external packet data networks, e.g., an Internet network and/or an Internet Protocol (IP) Multimedia Subsystem (IMS) network. The 5GC 160 includes a User Plane Function (UPF) 162 and an Access and Mobility Management (AMF) 164, and/or Session Management Function (SMF) 166. Generally speaking, the UPF 162 is configured to transfer user-plane packets related to audio calls, video calls, Internet traffic, etc., the AMF 164 is configured to manage authentication, registration, paging, and other related functions, and the SMF 166 is configured to manage PDU sessions.

As illustrated in Fig. 1A, the base station 104A supports a cell 124A, and the base station 106A supports a cell 126A. The base station 106A may additionally support a cell 125A. The cells 124A and 126A can partially overlap, so that the UE 102 can communicate in DC with the base station 104A and the base station 106A operating as a master node (MN) and a secondary node (SN), respectively. The cells 125A and 126A can partially overlap, so that the UE 102 can communicate in CA or DC with the base station 106A operating as a master node (MN) and a secondary node (SN), respectively. To directly exchange messages during DC scenarios and other scenarios discussed below, the base station 104A (also referred to herein as MN 104A) and the base station 106A (also referred to herein as SN 106A) can support an X2 or Xn interface. In general, the CN 110 can connect to any suitable number of base stations supporting 5G new radio (NR) cells and/or EUTRA cells.

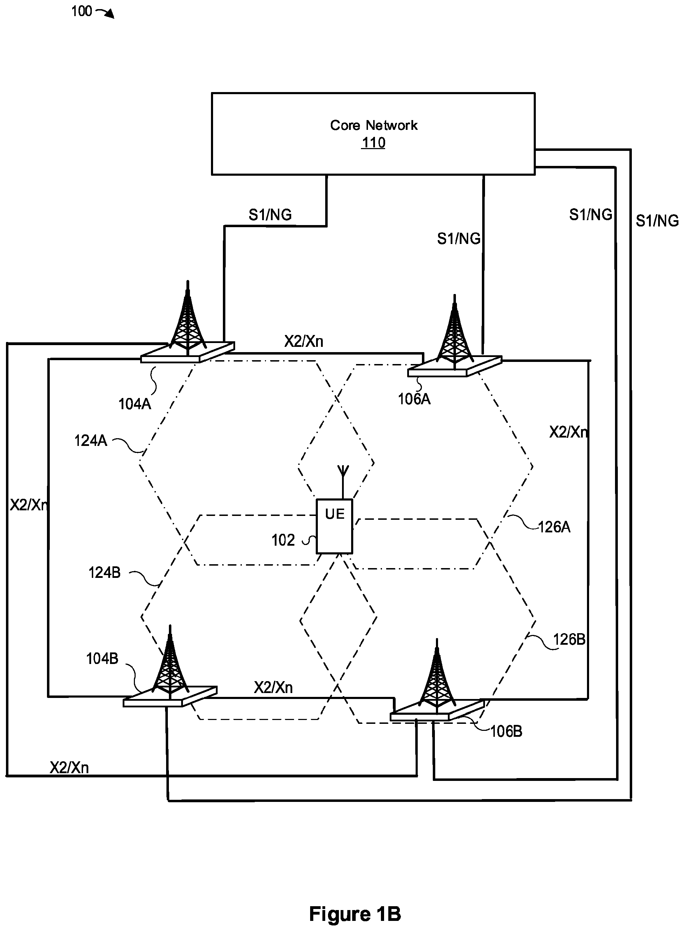

As illustrated in Fig. 1A, the base station 104A supports a cell 124A, and the base station 106A supports a cell 126A. The cells 124A and 126A can partially overlap, so that the UE 102 can communicate in DC with the base station 104A and the base station 106A operating as a master node (MN) and a secondary node (SN), respectively. To directly exchange messages during DC scenarios and other scenarios discussed below, the MN 104A and the SN 106A can support an X2 or Xn interface. In general, the CN 110 can connect to any suitable number of base stations supporting NR cells and/or EUTRA cells. An example configuration in which the EPC 110 is connected to additional base stations is discussed below with reference to Fig. 1B.

The base station 104A is equipped with processing hardware 130 that can include one or more general-purpose processors such as CPUs and non-transitory computer-readable memory storing machine-readable instructions executable on the one or more general-purpose processors, and/or special-purpose processing units (e.g., an application-specific integrated circuit (ASIC) or a digital signal processor (DSP)). The processing hardware 130 in the example implementation in Fig. 1A includes an MN RRC controller 132 that is configured to manage or control RRC configurations and RRC procedures. For example, the MN RRC controller 132 can be configured to support RRC messaging associated with RRC connection establishment procedures, RRC connection resume procedures, RRC connection reestablishment procedures, RRC reconfiguration procedures, procedures for MR-DC, CA, or other suitable functionalities, and/or to support the necessary operations when the base station 104A operates as an MN, as described below. The processing hardware 130 can include an SCG controller 134 configured to manage or control deactivation and/or activation of an SCG between the UE 102 and an SN.

The base station 106A is equipped with processing hardware 140 that can also include one or more general-purpose processors such as CPUs and non-transitory computer-readable memory storing machine-readable instructions executable on the one or more general-purpose processors, and/or special-purpose processing units (e.g., an ASIC or a DSP). The processing hardware 140 in an example implementation includes an SN RRC controller 142 configured to manage or control RRC configurations and RRC procedures. The processing hardware 140 can include an SCG controller 144 configured to manage, control or perform deactivation and/or activation of an SCG between the UE 102 and an SN. In general, because a base station can operate as an MN or an SN in different scenarios, the RRC controllers 132 and 142 can implement similar sets of functions and each support both MN and SN operations.

Still referring to Fig. 1A, the UE 102 is equipped with processing hardware 150 that can include one or more general-purpose processors such as CPUs and non-transitory computer-readable memory storing machine-readable instructions executable on the one or more general-purpose processors, and/or special-purpose processing units. The processing hardware 150 in the example implementation of Fig. 1A includes a UE RRC controller 152 that is configured to manage or control RRC configurations and/or RRC procedures. For example, the UE RRC controller 152 can be configured to support RRC messaging associated with RRC connection establishment procedures, RRC connection resume procedures, RRC connection reestablishment procedures, and/or procedures for MR-DC, CA, or other suitable functionalities, in accordance with any of the implementations described below. The processing hardware 150 can include an SCG controller 154 configured to manage, control or perform deactivation and/or activation of an SCG between the UE 102 and an SN.

More particularly, the RRC controllers 132, 142, and 152 can implement at least some of the techniques discussed below (with reference to various messaging and flow diagrams) to manage RRC configurations. The SCG controllers 134, 144, and 154 can implement at least some of the techniques discussed below (with reference to various messaging and flow diagrams) to manage SCG deactivation and/or activation.

In operation, the UE 102 can use a radio bearer (e.g., a DRB or an SRB) that at different times terminates at the MN 104A or the SN 106A. The UE 102 can receive a radio bearer configuration configuring the radio bearer from the MN 104A or the SN 106A. The UE 102 can apply one or more security keys when communicating on the radio bearer, in the uplink (from the UE 102 to a base station) and/or downlink (from a base station to the UE 102) direction. The UE 102 in some cases can use different RATs to communicate with the base stations 104A and 106A. Although the examples below may refer to specific RAT types, 5G NR or EUTRA, in general the techniques of this disclosure also can apply to other suitable radio access and/or core network technologies.

Fig. 1B depicts an example wireless communication system 100 in which communication devices can implement these techniques. The wireless communication system 100 includes a UE 102, a base station 104A, a base station 104B, a base station 106A, a base station 106B and a core network (CN) 110. The UE 102 initially connects to the base station 104A. The base stations 104B and 106B may have similar processing hardware as the base station 106A. The UE 102 initially connects to the base station 104A or 106A.

As illustrated in Fig. 1B, the base station 104A supports a cell 124A, the base station 104B supports a cell 124B, the base station 106A supports a cell 126A, and the base station 106B supports a cell 126B. The cells 124A and 126A can partially overlap, as can the cells 124A and 126B, so that the UE 102 can communicate in DC with the base station 104A (operating as an MN) and the base station 106A (operating as an SN) and, upon completing an SN change, with the base station 104A (operating as MN) and the base station 106B (operating as an SN). More particularly, when the UE 102 is in DC with the base station 104A and the base station 106A or 106B, the base station 104A operates as an MeNB, an Mng-eNB, or an MgNB, and the base station 106A or 106B operates as an SgNB or an Sng-eNB. The cells 124A and 124B can partially overlap, so that the UE 102 can communicate with the base station 104A and, upon completing a handover, with the base station 104A.

In general, the wireless communication network 100 can include any suitable number of base stations supporting NR cells and/or EUTRA cells. More particularly, the EPC 111 or the 5GC 160 can be connected to any suitable number of base stations supporting NR cells and/or EUTRA cells. Although the examples below refer specifically to specific CN types (EPC, 5GC) and RAT types (5G NR and EUTRA), in general the techniques of this disclosure also can apply to other suitable radio access and/or core network technologies such as sixth generation (6G) radio access and/or 6G core network or 5G NR-6G DC.

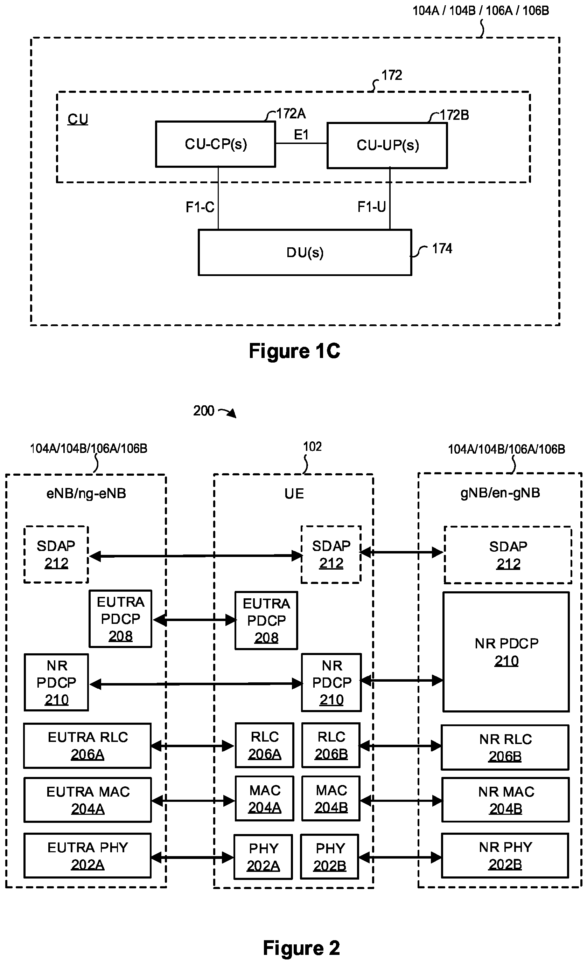

Fig. 1C depicts an example, distributed or disaggregated implementation of any one or more of the base stations 104A, 104B, 106A, 106B. In this implementation, the base station 104A, 104B, 106A, or 106B includes a central unit (CU) 172 and one or more DUs 174. The CU 172 includes processing hardware, such as one or more general-purpose processors (e.g., CPUs) and a computer-readable memory storing machine-readable instructions executable on the general-purpose processor(s), and/or special-purpose processing units. For example, the CU 172 can include the processing hardware 130 or 140 of Fig. 1A.

Each of the DUs 174 also includes processing hardware that can include one or more general-purpose processors (e.g., CPUs) and computer-readable memory storing machine-readable instructions executable on the one or more general-purpose processors, and/or special-purpose processing units. For example, the processing hardware can include a medium access control (MAC) controller configured to manage or control one or more MAC operations or procedures (e.g., a random access procedure), and a radio link control (RLC) controller configured to manage or control one or more RLC operations or procedures when the base station (e.g., base station 106A) operates as an MN or an SN. The process hardware can also include a physical layer controller configured to manage or control one or more physical layer operations or procedures.

In some implementations, the CU 172 can include a logical node CU-CP 172A that hosts the control plane part of the Packet Data Convergence Protocol (PDCP) protocol of the CU 172. The CU 172 can also include logical node(s) CU-UP 172B that hosts the user plane part of the PDCP protocol and/or Service Data Adaptation Protocol (SDAP) protocol of the CU 172. The CU-CP 172A can transmit control information (e.g., RRC messages, F1 application protocol messages), and the CU-UP 172B can transmit the data packets (*e.g.*, SDAP PDUs or Internet Protocol packets).

The CU-CP 172A can be connected to multiple CU-UP 172B through the E1 interface. The CU-CP 172A selects the appropriate CU-UP 172B for the requested services for the UE 102. In some implementations, a single CU-UP 172B can be connected to multiple CU-CP 172A through the E1 interface. The CU-CP 172A can be connected to one or more DU 174s through an F1-C interface. The CU-UP 172B can be connected to one or more DU 174 through the F1-U interface under the control of the same CU-CP 172A. In some implementations, one DU 174 can be connected to multiple CU-UP 172B under the control of the same CU-CP 172A. In such implementations, the connectivity between a CU-UP 172B and a DU 174 is established by the CU-CP 172A using Bearer Context Management functions.

Fig. 2 illustrates, in a simplified manner, an example protocol stack 200 according to which the UE 102 can communicate with an eNB/ng-eNB or a gNB *(e.g.,* one or more of the base stations 104A, 104B, 106A, 106B).

In the example stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to an EUTRA PDCP sublayer 208 and, in some cases, to a NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides data transfer services to the NR PDCP sublayer 210. The NR PDCP sublayer 210 in turn can provide data transfer services to Service Data Adaptation Protocol (SDAP) 212 or a radio resource control (RRC) sublayer (not shown in Fig. 2). The UE 102, in some implementations, supports both the EUTRA and the NR stack as shown in Fig. 2, to support handover between EUTRA and NR base stations and/or to support DC over EUTRA and NR interfaces. Further, as illustrated in Fig. 2, the UE 102 can support layering of NR PDCP 210 over EUTRA RLC 206A, and SDAP sublayer 212 over the NR PDCP sublayer 210.

The EUTRA PDCP sublayer 208 and the NR PDCP sublayer 210 receive packets (e.g., from an Internet Protocol (IP) layer, layered directly or indirectly over the PDCP layer 208 or 210) that can be referred to as service data units (SDUs), and output packets (e.g., to the RLC layer 206A or 206B) that can be referred to as protocol data units (PDUs). Except where the difference between SDUs and PDUs is relevant, this disclosure for simplicity refers to both SDUs and PDUs as "packets."

On a control plane, the EUTRA PDCP sublayer 208 and the NR PDCP sublayer 210 can provide SRBs to exchange RRC messages or non-access-stratum (NAS) messages, for example. On a user plane, the EUTRA PDCP sublayer 208 and the NR PDCP sublayer 210 can provide DRBs to support data exchange. Data exchanged on the NR PDCP sublayer 210 can be SDAP PDUs, Internet Protocol (IP) packets or Ethernet packets.

In scenarios where the UE 102 operates in EN-DC with the base station 104A operating as an MeNB and the base station 106A operating as an SgNB, the wireless communication system 100 can provide the UE 102 with an MN-terminated bearer that uses EUTRA PDCP sublayer 208, or an MN-terminated bearer that uses NR PDCP sublayer 210. The wireless communication system 100 in various scenarios can also provide the UE 102 with an SN-terminated bearer, which uses only the NR PDCP sublayer 210. The MN-terminated bearer can be an MCG bearer, a split bearer, or an MN-terminated SCG bearer. The SN-terminated bearer can be an SCG bearer, a split bearer, or an SN-terminated MCG bearer. The MN-terminated bearer can be an SRB *(e.g.,* SRB1 or SRB2) or a DRB. The SN-terminated bearer can be an SRB or a DRB.

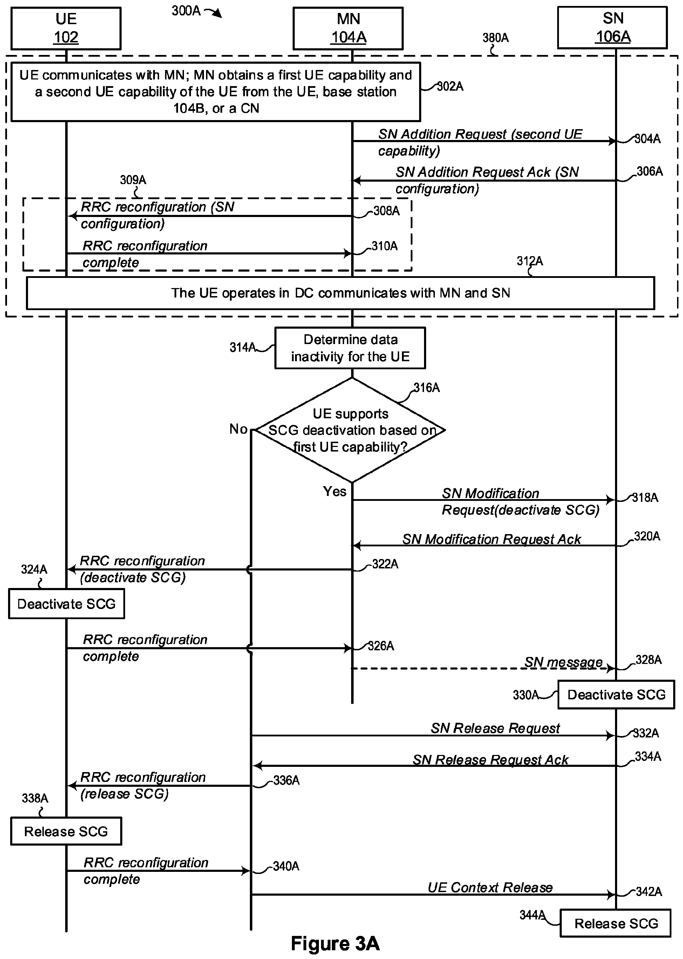

Next, several example scenarios in which the base stations operating in the system of Fig. 1A deactivate or release an SCG between the UE 102 and an SN of the RAN 105 are discussed with reference to Figs. 3A-5B. Generally speaking, events in Figs. 3A-5B that are similar are labeled with similar reference numbers (e.g., event 380A is similar to events 380B-C, 480A-B, and 580A-B; event 322A is similar to events 322B-C, 422A-B, and 522A-B), with differences discussed below where appropriate. With the exception of the differences shown in the figures and discussed below, any of the alternative implementations discussed with respect to a particular event (e.g., for messaging and processing) may apply to events labeled with similar reference numbers in other figures.

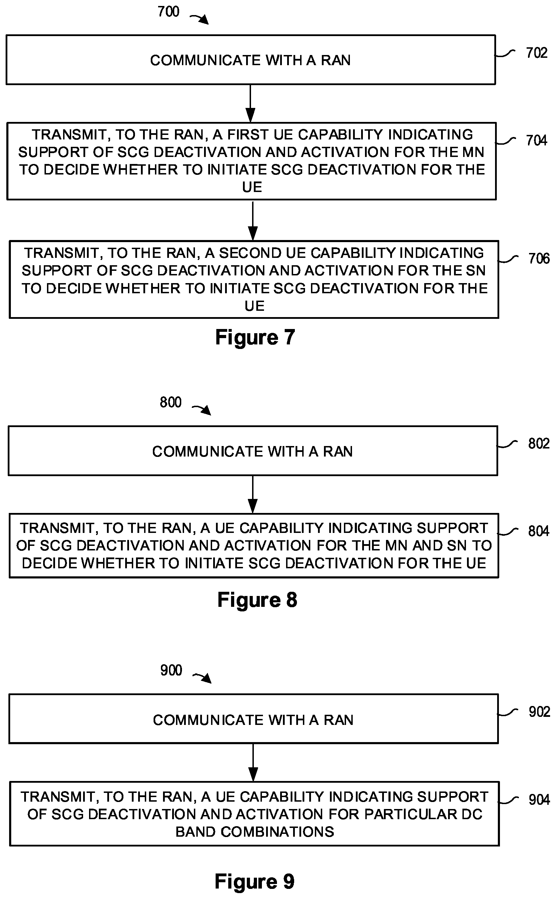

Referring first to Fig. 3A, in a scenario 300A, the base station 104A operates as an MN, and the base station 106A operates as an SN. Initially, the UE 102 communicates 302A uplink (UL) PDUs and/or downlink (DL) PDUs with the MN 104A. The MN 104A can obtain a first UE capability and a second UE capability of the UE 102 from the UE 102, base station 104B, or a CN 110 (the base station 104B and CN 110 are not shown in Fig. 3A). In some implementations, the first UE capability can be a first radio access technology (RAT) capability information element (IE) (*e.g.*, *UE-EUTRA-Capability* IE) including first plural UE capabilities for communication with the MN 104A via the first RAT, and the second UE capability can be a second RAT capability IE (e.g., *UE-NR-Capability* or *UE-MRDC-Capability* IE) including second plural capabilities for communication with the SN 106A via the second RAT. For example, the MN 104A can be a base station that supports a 4G LTE RAT (e.g., an eNB or an ng-eNB), and the SN 106A can be a base station that supports a 5G NR RAT (e.g., a gNB). Accordingly, the MN 104A can interpret the first UE capability that is formatted in accordance with the 4G LTE RAT, and the SN 106A can interpret the second UE capability that is formatted in accordance with the 5G NR RAT. As will be discussed in further detail with reference to Fig. 8, in some implementations, the UE 102 may provide a single UE capability to the RAN, rather than a first UE capability and a second UE capability. For example, in these implementations, both the MN 104A and the SN 106A are capable of interpreting the same UE capability field or IE because both the MN 104A and the SN 106A support the same RAT (e.g., both the MN 104A and the SN 106A are gNBs).

Later in time, the MN 104A can send 304A an *SN Addition Request* message including the second UE capability to the base station 106A to configure the base station 106A as an SN for the UE 102 (i.e., to enable dual connectivity with the MN 104A and SN 106A for the UE 102). For example, the MN 104A may determine to configure the base station 106A as an SN based on measurement result(s) received from the UE 102. In another example, the UE 102 at event 302A may be in DC with the MN 104A and an SN 106B. In this case, the MN 104A may determine to configure the base station 106A as an SN in response to an indication that the SN 106B requires an SN change (*e.g.*, *SN Change Required* message), which the SN 106B can transmit to the MN 104A. In response to the *SN Addition Request* message, the SN 106A sends 306A an *SN Addition Request Acknowledge* message including an SN configuration to the MN 104A. After receiving the *SN Addition Request Acknowledge* message, the MN 104A transmits 308A an RRC reconfiguration message including the SN configuration to the UE 102 and in response, the UE 102 transmits 310A an RRC reconfiguration complete message to the MN 104A. Then the UE 102 operates 312A in DC with the MN 104A and SN 106A. After receiving 310A the RRC reconfiguration complete message, the MN 104A can send an *SN Reconfiguration Complete* message to the SN 106A to indicate that the UE 102 has received the SN configuration. In some implementations, the UE can include, in the RRC reconfiguration message 310A, an SN RRC reconfiguration complete message in response to the SN configuration. In turn, the MN 104A can include the SN RRC reconfiguration complete message in the *SN Reconfiguration Complete* message.

The events 302A, 304A, 306A, 308A and 310A are collectively referred to in Fig. 3A as a DC configuration procedure 380A. The events 308A and 310A are collectively referred to in Fig. 3A as an RRC reconfiguration procedure 309A.

In some implementations, the UE 102 communicates with the SN 106A using the SN configuration at event 312A. To communicate with the SN 106A, the UE 102 performs a random access procedure with the SN 106A in response to receiving the SN configuration. More specifically, the UE 102 performs the random access procedure on a cell (e.g., cell 126A) with the SN 106A in accordance with random access configurations in the SN configuration. After completing the random access procedure, the UE 102 in DC can communicate 312A UL PDUs and/or DL PDUs via radio bearers which can include SRBs and/or DRBs. The MN 104A and/or the SN 106A can configure the radio bearers to the UE 102, e.g., at event 302A or at events 306A and/or 308A. The UE 102 in DC communicates 312A UL PDUs and/or DL PDUs with the SN 106A on an SCG that the SN 106A configures for communication with the UE 102. The UE 102 in DC communicates with the MN 104A on an MCG using an MN configuration and with the SN 106A on an SCG using the SN configuration. In the MN configuration, the MN 104A configures the MCG which includes at least one serving cell operated by the MN 104A. In the SN configuration, the SN 106A configures the SCG which includes at least one serving cell operated by the SN 106A.

The random access procedure can be a four-step random access procedure or a two-step random access procedure, for example. In different implementations and/or scenarios, the random access procedure may be a contention-based random access procedure or a contention-free random access procedure. In some implementations and/or scenarios, the UE 102 may include a UE identifier known by the SN 106A in a "message 3" of a four-step random access procedure, or in a message A of the two-step random access procedure, so that the SN 106A can identify the UE 102 using the UE identifier. In some implementations, the UE identifier is a radio network temporary identifier (RNTI) *(e.g.,* a C-RNTI) allocated by the SN 106A in the SN configuration. In other implementations, the SN 106A identifies the UE 102 based on a dedicated random access preamble that the SN 106A receives from the UE 102 during the random access procedure. The SN 106A can allocate the dedicated random access preamble in the SN configuration.

In some implementations, the MN configuration includes multiple configuration parameters and the UE 102 receives the configuration parameters in one or more RRC messages from the MN 104A. In other implementations, the SN configuration includes multiple configuration parameters and the UE 102 receives the configuration parameters in one or more RRC messages from the SN 106A, *e.g.*, via the MN 104A or on an SRB (*e.g.*, SRB3) that the MN 104A or SN 106A configures to exchange RRC messages between the UE 102 and the SN 106A.

At a later time, the MN 104A detects that a condition for deactivating the SCG is satisfied. In some implementations, such as the scenario 300A, detecting the condition includes determining 314A that data inactivity on the SCG exists for the UE 102. In one implementation, the MN 104A determines that data inactivity exists for the UE 102 based on a message for the UE 102 that the MN 104A receives from the SN 106A. For example, the SN 106A may detect data inactivity for the UE 102, and in response send an *Activity Notification* message with an inactive indication for the UE 102 to the MN 104A. The MN 104A can then determine that data inactivity exists for the UE 102 based on the received *Activity Notification* message. In another implementation, if the MN 104A has not received data packets to be sent to the UE 102 via the SN 106A for a predetermined time period, the MN 104A may detect data inactivity exists for the UE 102.

In other implementations, the MN 104A detecting the condition, or determining that data inactivity on the SCG exists, is based on a UE preference that the MN 104A receives from the UE 102. For example, the UE 102 can transmit UE assistance information (e.g., *UEAssistanceInformation* message) to the MN 104A indicating that the UE (temporarily) prefers single connectivity, *e*.*g*., due to saving power or overheating. Detecting the condition may include receiving the UE assistance information. Additionally or alternatively, the MN 104A can determine 314A data inactivity on the SCG for the UE 102 in response to the UE assistance information.

After or in response to detecting the condition (e.g., after in response to determining 314A that data inactivity on the SCG exists for the UE 102), the MN 104A determines 316A whether the UE 102 supports SCG deactivation based on the first UE capability. As discussed above, the first UE capability is formatted in accordance with a RAT supported by the MN 104A (e.g., a *UE-EUTRA-Capability* IE if the MN 104A is an eNB or an ng-eNB that supports a 4G LTE RAT). In some implementations, the first UE capability includes a capability field or IE to indicate that the UE 102 supports SCG deactivation. If the first UE capability includes the capability field, the MN 104A determines that the UE 102 supports SCG deactivation. If the first UE capability does not include the capability field, the MN 104A determines that the UE 102 does not support SCG deactivation.

If the first UE capability indicates that the UE 102 supports SCG deactivation, the MN 104A sends 318A an *SN Modification Request* message to the SN 106A that causes the SN 106A to deactivate the SCG for the UE 102. In response to the *SN Modification Request* message, the SN 106A sends 320A an *SN Modification Request Acknowledge* message to the MN 104A. In some implementations, the MN 104A includes an indication (e.g., a field or an information element (IE)) in the *SN Modification Request* message to cause the SN 106A to deactivate the SCG.

In response to the determination 316A that the UE 102 supports the SCG deactivation, after the MN 104A transmits 318A the *SN Modification Request* message or after the MN 104A receives 320A the *SN Modification Request Acknowledge* message, the MN 104A transmits 322A an RRC reconfiguration message to cause the UE 102 to deactivate the SCG. In response to the RRC reconfiguration message, the UE 102 deactivates 324A the SCG for communication with the SN 106A and transmits 326A an RRC reconfiguration complete message to the MN 104A. After deactivating the SCG, the UE 102 retains the radio connection with the MN 104A. After receiving the RRC reconfiguration complete message, the MN 104A can send 328A an SN message (e.g., *SN Reconfiguration Complete* message) to the SN 106A to indicate that the UE 102 has deactivated the SCG. In some implementations, the MN 104A can generate an indication (e.g., a field or an information element (IE)) to deactivate the SCG and include the indication in the RRC reconfiguration message the MN 104A transmits 322A. In some implementations, the UE 102 does not include an SN RRC message in the RRC reconfiguration message 326A, and the MN 104A does not include an SN RRC message in the SN message 328A. In other implementations, the SN 106A may include an SCG deactivation command message to deactivate the SCG in the *SN Modification Request Acknowledge* message, and in turn, the MN 104A includes the SCG deactivation command message in the RRC reconfiguration message 322A. In this case, the SN 106A includes a field or IE to deactivate the SCG in the SCG deactivation command message and the MN 104A does not generate a field or IE to deactivate the SCG. The UE 102 includes an SCG deactivation complete message in the RRC reconfiguration complete message 326A in response to the SCG deactivation command message. In some implementations, the SCG deactivation command message and SCG deactivation complete message can be an SN RRC reconfiguration message and an SN RRC reconfiguration complete message, respectively.

The SN 106A can deactivate 330A the SCG for communication with the UE 102 in response to receiving 318A the *SN Modification Request* message, after transmitting 320A the *SN Modification Request Acknowledge* message, or after receiving 328A the SN message. For example, the SN 106A can deactivate 330A the SCG after receiving the SN message, or after a predetermined time after receiving 318A the *SN Modification Request* message, such that the SN 106A does not deactivate 330A the SCG at the SN 106A until the UE 102 deactivates 324A the SCG at the UE 102.

If the MN 104A determines 316A that UE 102 does not support the SCG deactivation, the MN 104A can determine to release the SCG for the UE 102. In response to the determination, the MN 104A sends 332A an *SN Release Request* message to the SN 106A. In response, the SN 106A sends 334A an *SN Release Request Acknowledge* message to the MN 104A. In response to determining to release the SCG, after transmitting the *SN Release Request* message or after receiving the *SN Release Request Acknowledge* message, the MN 104A transmits 336A an RRC reconfiguration message to the UE 102 to cause the UE 102 to release the SCG. The MN 104A can include an SCG release field or IE in the RRC reconfiguration message the MN transmits 336A to indicate that the UE 102 should release the SCG. In response to the RRC reconfiguration message or the SCG release field/IE, the UE 102 releases 338A the SCG and transmits 340A an RRC reconfiguration complete message to the MN 104A. After receiving the RRC reconfiguration complete message, the MN 104A can send 342A a *UE Context Release* message to the SN 106A. In response to the *UE Context Release* message, the SN 106A releases 344A the SCG (i.e., releases a UE context of the UE 102).

In some implementations, the MN 104A can include an indication to deactivate the SCG in the *SN Modification Request* message that the MN 104A transmits 318A. In other implementations, the MN 104A can include an indication to suspend lower layers in the *SN Modification Request* message that the MN 104A transmits 318A to deactivate the SCG. In this case, the MN 104A may or may not include the indication to deactivate the SCG in the *SN Modification Request* message that the MN 104A transmits 318A.

In some implementations, the MN configuration includes configuration parameters in an *RRCReconfiguration* message, *RRCReconfiguration-IEs,* or the *CellGroupConfig* information element (IE) conforming to 3GPP TS 38.331. In one implementation, the MN configuration can be an *RRCReconfiguration* message, *RRCReconfiguration-IEs,* or the *CellGroupConfig* IE conforming to 3GPP TS 38.331. In other implementations, the MN configuration can include configuration parameters in a *RadioResourceConfigDedicated* IE, *RRCConnectionReconfiguration* message, or *RRCConnectionReconfiguration-IEs.* In one implementation, the MN configuration can be a *RadioResourceConfigDedicated* IE, an *RRCConnectionReconfiguration* message, or an *RRCConnectionReconfiguration-IEs* conforming to 3GPP TS 36.331.

The SN configuration can include multiple configuration parameters that configure radio resources for the UE 102 to communicate with the SN 106A via a PSCell (e.g., the cell 126A or a cell other than cell 126A) and zero, one, or more SCells of the SN 106A. For example, the SN configuration can include PHY configuration(s), MAC configuration(s), and/or RLC configuration(s). The SN configuration may or may not include measurement configuration(s).

In some implementations, the SN configuration includes configuration parameters in an *RRCReconfiguration* message, *RRCReconfiguration-IEs,* or a *CellGroupConfig* IE conforming to 3GPP TS 38.331. In one implementation, the SN configuration can be an *RRCReconfiguration* message, *RRCReconfiguration-IEs,* or a *CellGroupConfig* IE conforming to 3GPP TS 38.331. In other implementations, the SN configuration can include configuration parameters in an *SCG-ConfigPartSCG-r12* IE. In some implementations, the SN configuration can be an *RRCConnectionReconfiguration* message, *RRCConnectionReconfiguration-IEs*, or a *ConfigPartSCG-r12* IE conforming to 3GPP TS 36.331.

If the MN 104A is a gNB, the RRC reconfiguration message and the RRC reconfiguration complete message are an *RRCReconfiguration* message and an *RRCReconfigurationComplete* message, respectively. If the MN 104A is an eNB or ng-eNB, the RRC reconfiguration message and the RRC reconfiguration complete message are an *RRCConnectionReconfiguration* message and an *RRCConnectionReconfigurationComplete* message, respectively. If the SN 106A is a gNB, the SN RRC reconfiguration message and the SN RRC reconfiguration complete message are an *RRCReconfiguration* message and an *RRCReconfigurationComplete* message, respectively. If the SN 106A is an eNB or ng-eNB, the SN RRC reconfiguration message and the SN RRC reconfiguration complete message are an *RRCConnectionReconfiguration* message and an *RRCConnectionReconfigurationComplete* message, respectively.

In some implementations, the MN 104A can determine whether the UE 102 supports SCG deactivation based on the first UE capability before sending 304A the *SN Addition Request* message to the SN 106A, similar to the event 316A. If the first UE capability indicates that the UE 102 supports SCG deactivation, the MN 104A can include an indication that instructs the SN 106A to deactivate the SCG in the *SN Addition Request* message 304A. Thus, the SN 106A deactivates the SCG in response to the indication to deactivate the SCG. In this case, the MN 104A indicates that the UE 102 should deactivate the SCG in the RRC reconfiguration message 308A. Alternatively, the SN 106A indicates in the SN configuration that the UE 102 should deactivate the SCG. In response to the indication to deactivate the SCG, the UE 102 does not activate the SCG and does not perform a random access procedure in response to the RRC reconfiguration message 306A. That is, the UE 102 maintains the SCG in a deactivated state even though the UE 102 receives the SN configuration for a PSCell addition.

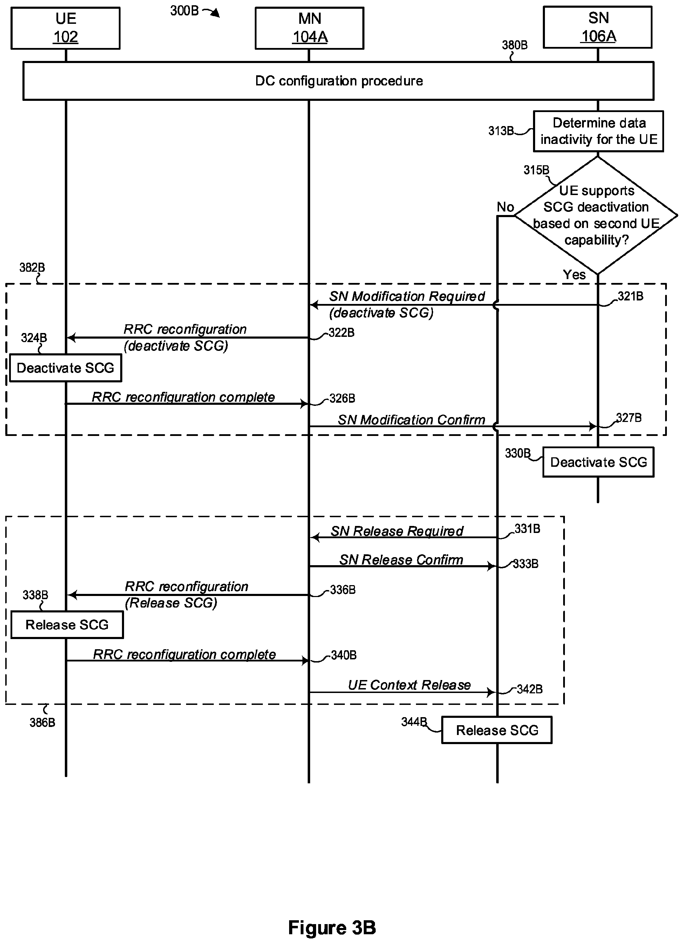

Turning to Fig. 3B, a scenario 300B is generally similar to the scenario 300A, except that the SN 106A, rather than the MN 104A, determines to deactivate the SCG. Initially, the MN 104A, the SN 106A, and the UE 102 communicate with each other during a DC configuration procedure 380B. During the DC configuration procedure 380B, the SN 106A receives the second UE capability from the MN 104A. The second UE capability is formatted in accordance with a RAT supported by the SN 106A (e.g., the second UE capability can be a *UE-NR-Capability* IE or a *UE-MRDC-Capability* IE if the SN 106A is a gNB that supports a 5G NR RAT). At a later time, the SN 106A detects that a condition for deactivating the SCG is satisfied. Similar to event 314A in the scenario 300A, detecting the condition in the scenario 300B includes determining 313B that data inactivity on the SCG exists for the SCG. After or in response to detecting the condition, the SN 106A determines 315B whether the UE 102 supports SCG deactivation. In contrast to the event 316A, the SN 106A determines 315B whether the UE 102 supports SCG deactivation based on the second UE capability. In some implementations, the second UE capability includes a capability field or IE to indicate that the UE 102 supports SCG deactivation. If the second UE capability includes the capability field, the SN 106A determines that the UE 102 supports SCG deactivation. If the second UE capability does not include the capability field, the SN 106A determines that the UE 102 does not support SCG deactivation.

If the second UE capability indicates that the UE 102 supports SCG deactivation, the SN 106A sends 321B an *SN Modification Required* message to the MN 104A. In the *SN Modification Required* message, the SN 106A can inform the MN 104A that the SCG is to be deactivated. In response, the MN 104A transmits 322B an RRC reconfiguration message to the UE 102. In some implementations, the SN 106A generates an indication that instructs the UE 102 to deactivate the SCG and includes this indication in the *SN Modification Required* message. The MN 104A can then include this indication that was generated by the SN 106A in the RRC reconfiguration message that the MN 104A transmits 322B. For example, the SN 106A can generate a SN RRC message (e.g., SN RRC reconfiguration message) including the indication, and include the SN RRC message in the *SN Modification Required* message. In this example, the MN 104A includes the SN RRC message in the RRC reconfiguration message at event 322B. In other implementations, the MN 104A can generate the indication that instructs the UE 102 to deactivate the SCG, and includes this indication in the RRC reconfiguration message that the MN 104A transmits 322B.

In response to receiving 322B the RRC reconfiguration message, the UE 102 deactivates 324B the SCG for communication with the SN 106A and transmits 326B an RRC reconfiguration complete message to the MN 104A. After receiving 321B the *SN Modification Required* message or receiving 326B the RRC reconfiguration complete message, the MN 104A transmits 327B an *SN Modification Confirm* message to the SN 106A. The SN 106A can deactivate 330B the SCG for communication with the UE 102 in response to determining 315B that the UE 102 supports SCG deactivation, after transmitting 321B the *SN Modification Required* message, or after receiving 327B the *SN Modification Confirm* message. For example, the SN 106A can deactivate 330B the SCG after receiving 327B the *SN Modification Confirm* message, or after a predetermined time after transmitting 321B the *SN Modification Required* message, such that the SN 106A does not deactivate 330B the SCG at the SN 106A until the UE 102 deactivates 324B the SCG at the UE 102.

The events 321B, 322B, 324B, 326B, and 327B are collectively referred to in Fig. 3B as an SCG deactivation procedure 382B.

If the SN 106A determines 315B that the UE 102 does not support the SCG deactivation, the SN 106A can determine to release the SCG for the UE 102. In response to the determination, the SN 106A sends 331B an *SN Release Required* message to the MN 104A. In response, the MN 104A can send 333B an *SN Release Confirm* message to the SN 106A. Similar to the event 336A, the MN 104A also sends 336B an RRC reconfiguration message to the UE 102 including an indication that instructs the UE 102 to release the SCG. In response to the RRC reconfiguration message or an SCG release field or IE in the RRC reconfiguration message, the UE 102 releases 338B the SCG and transmits 340B an RRC reconfiguration complete message to the MN 104A. After receiving 340B the RRC reconfiguration complete message, the MN 104A can send 342B a *UE Context Release* message to the SN 106A. In response to the *UE Context Release* message, the SN 106A releases 344B the SCG.

The events 331B, 333B, 336B, 338B, 340B, and 342B are collectively referred to in Fig. 3B as an SCG release procedure 386B.

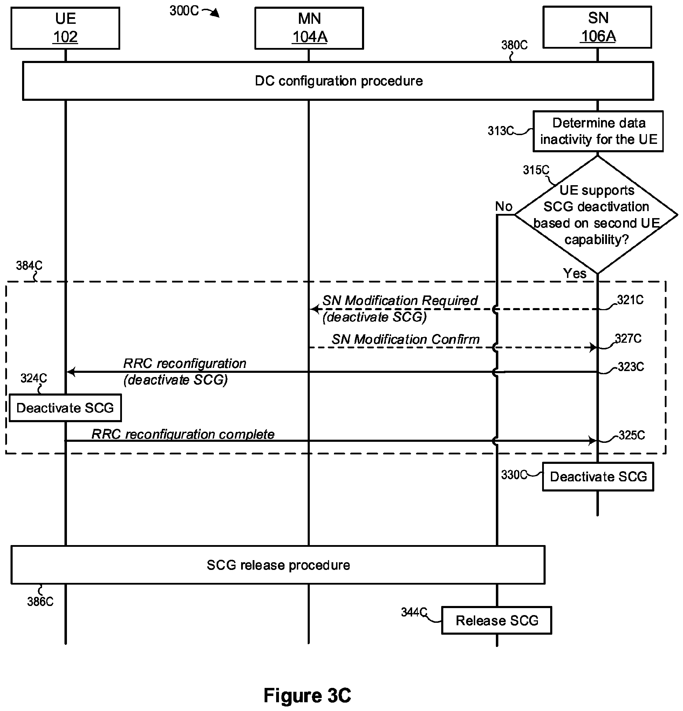

Referring next to Fig. 3C, a scenario 300C is generally similar to the scenario 300B, except the SN 106A communicates directly with the UE 102 to cause the UE 102 to deactivate the SCG. After determining 315C that the UE 102 supports SCG deactivation, the SN 106A sends 323C an RRC reconfiguration message directly to the UE 102 (e.g., via SRB3) that includes an indication that instructs the UE 102 to deactivate the SCG. In response, the UE 102 deactivates 324C the SCG and transmits 325C an RRC reconfiguration complete message to the SN 106A. After determining 315C that the UE 102 supports deactivation, after transmitting 323C the RRC reconfiguration message, or after receiving 325C the RRC reconfiguration complete message from the UE 102, the SN 106A deactivates 330C the SCG. For example, the SN 106A can deactivate 330C the SCG a predetermined time after transmitting 323C the *SN Modification Required* message or after receiving 325C the RRC reconfiguration complete message, such that the SN 106A does not deactivate 330C the SCG at the SN 106A until the UE 102 deactivates 324C the SCG at the UE 102.

In some implementations, after determining 315C that the UE 102 supports SCG deactivation, the SN 106A transmits 321C an *SN Modification Required* message to the MN 104A informing the MN 104A that the SCG is to be deactivated. In response, the MN 104A sends 327C an *SN Modification Confirm* message to the SN 106A. In some alternative implementations, the SN 106A at event 321C can send another SN message to the SN informing the MN 104A that the SCG is to be deactivated, instead of the *SN Modification Required* message. The events 321C, 327C, 323C, 324C, and 325C are collectively referred to in this disclosure as an SCG deactivation procedure 384C.

Alternatively, if the SN 106A determines 315C that the UE 120 does not support SCG deactivation, the SN 106A can initiate an SCG release procedure 386C and release 344C the SCG at the SN.

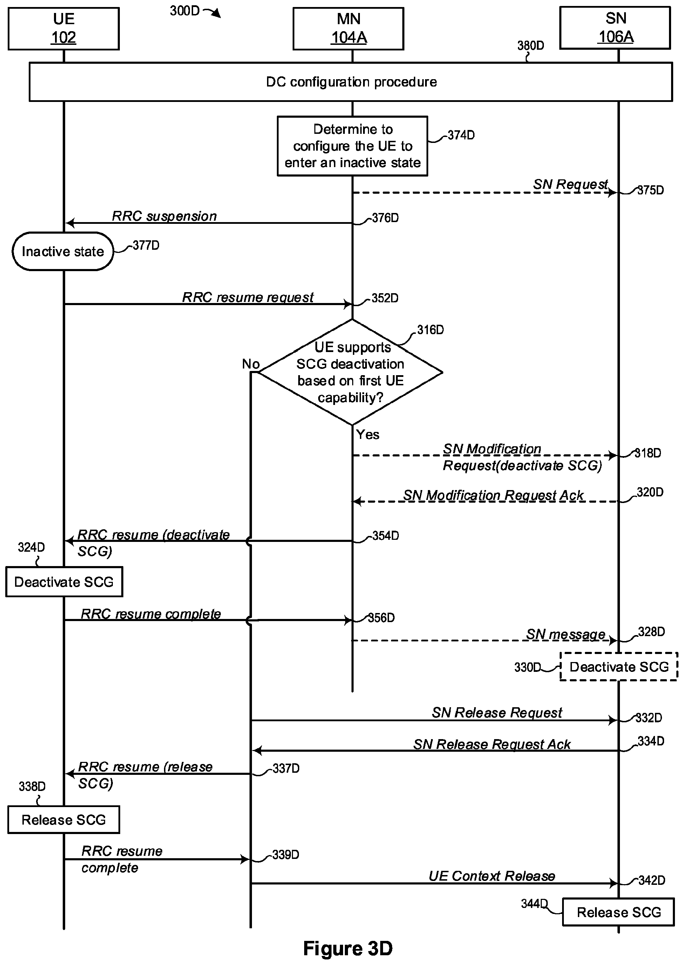

Turning to Fig. 3D, a scenario 300D is generally similar to the scenario 300A, except that a portion of the scenario 300D may occur when the radio connection between the UE 102 and the RAN 105 is suspended (e.g., when the UE 102 is in the inactive or idle state of the protocol for controlling radio resources between the UE 102 and the RAN 105, such as the RRC_INACTIVE or RRC_IDLE state of the RRC protocol). After DC configuration procedure 380D, the MN 104A determines 374D to configure the UE to enter an inactive state (e.g., RRC_INACTIVE or RRC_IDLE). The MN 104A then sends 376D an RRC suspension message to the UE 102 to cause the UE 102 to transition to the inactive state. When the UE 102 transitions 377D to the inactive state, the UE 102 may suspend the MCG and the SCG, i.e., deactivate the MCG and the SCG. In some implementations, the MN 104A also transmits 375D an *SN Request* message to the SN 106A to inform the SN 106A that the UE 102 is transitioning to the inactive state. In response to the RRC suspension message, the UE 102 transitions 377D to the inactive state.

At a later time, the UE 102 determines to resume the suspended radio connection with the RAN 105, and transmits 352D an RRC resume request to the MN 104A. Depending on the implementation, in response to receiving 352D the RRC resume request, the MN 104A may determine that a condition for deactivating the SCG is satisfied. For example, in some implementations, the UE 102 reactivates both the MCG and SCG after transmitting 352D the RRC resume request, and/or the RAN 105 reactivates the MCG and the SCG after receiving 352D the RRC resume request. However, in other implementations, only the MCG is reactivated (i.e., resumed) by the UE 102 and/or the RAN 105 after receiving or transmitting, respectively, the RRC resume request. In implementations where the SCG is reactivated, the MN 104A may determine whether to deactivate or to release the SCG.

In response to receiving 352D the RRC resume request, the MN 104A may determine that a condition for deactivating the SCG is satisfied. For example, in implementations in which the UE 102 reactivates the SCG after transmitting 352D the RRC resume request message, the MN 104A can determine to deactivate the SCG, or to release the SCG if the UE 102 does not support SCG deactivation. In implementations in which the UE 102 does not reactivate the SCG, the MN 104A can still determine to inform the UE 102 to keep the SCG in the deactivated state.

Thus, after receiving 352D the RRC resume request message, the MN 104A determines 316D whether the UE 102 supports SCG deactivation based on the first UE capability. If so, then the MN 104A transmits 354D an RRC resume message to the UE 102 including an indication that the UE 102 is to deactivate the SCG or to allow the SCG to remain deactivated. In response, the UE 102 enters an connected state and deactivates 324D the SCG, if the SCG is activated at the UE 102, and transmits 356D an RRC resume complete message to the MN 104A. In addition, after receiving 352D the RRC resume request, if the SCG has been reactivated, the MN 104A transmits 318D an *SN Modification Request* message including an indication to deactivate the SCG to the SN 106A. The SN 106A transmits 320D an *SN Modification Request Acknowledge* message to the MN 104A. Further, after receiving 356D the RRC resume complete message, the MN 104A can send 328D an SN message (e.g., *SN Reconfiguration Complete* message) to the SN 106A to indicate that the UE 102 has deactivated the SCG. The SN 106A can deactivate 330D the SCG after receiving 318D the *SN Modification Request* message, after transmitting 320D the *SN Modification Request Acknowledge* message, or after receiving 328D the SN message.

If the MN 104A determines 316D that the UE 102 does not support SCG deactivation, then the MN 104A causes the SN 106A and the UE 102 to release the SCG. The MN 104A transmits 332D an *SN Release Request* message to the SN 106A, and the SN 106A can transmit 334D an *SN Release Request Acknowledge* message to the MN 104A in response. Further, the MN 104A transmits 337D an RRC resume message including an indication to release the SCG. In response, the UE 102 releases 338D the SCG and transmits 339D an RRC resume complete message to the MN 104A. The MN 104A can then send 342D a *UE Context Release* message to the SN 106A to cause the SN 106A to release 344D the SCG.

In some alternative implementations, after receiving 352D the RRC resume request message, the MN 104A determines to allow the MCG and SCG to remain deactivated. For example, the MN 104A makes such a determination in response to a resume cause value in the RRC resume request message. For example, the resume cause value (e.g., *rna-Update*) can indicate that the UE 102 sends the RRC resume request to update RAN notification area (RNA). In response to the determination and the RRC resume request message, the MN 104A can send a second RRC suspension message to the UE 102 instead of the RRC resume message at event 354D. The UE 102 allows the MCG and SCG to remain deactivated in response to the second RRC suspension message.

In other alternative implementations, after receiving 352D the RRC resume request message, the MN 104A determines to reactivate both the MCG and SCG. For example, the MN 104A makes such a determination in response to a resume cause value in the RRC resume request message. For example, the resume cause value (e.g., *mo-Data*) can indicate that the UE 102 sends the RRC resume request for data communication. In another example, the resume cause value can indicate that the UE 102 requests to reactivate the MCG and SCG, i.e., resume the MCG and SCG. In response to the determination, the MN 104A can send 318D a *SN Modification Request* message to the SN 106A to reactivate or resume the SCG, instead of deactivating the SCG. In response, the SN 106A sends to the MN 104A an *SN Modification Request Acknowledge* message including an SN configuration. After receiving the SN configuration, the MN 104A includes the SN configuration in the RRC resume message at event 354D, and the MN 104A can send 354D the RRC resume message to the UE 102. Neither the MN 104A nor the SN 106A include an indication to deactivate the SCG in the RRC resume message. In response to the RRC resume message, the UE 102 enters the connected state, activates or resumes the MCG and SCG, and communicates with the MN 104A and SN 106A in DC.

If the MN 104A is a gNB, the (second) RRC suspension message, RRC resume request message, the RRC resume message, and the RRC resume complete message are an *RRCRelease* message, an *RRCResumeRequest* message, an *RRCResume* message, and an *RRCResumeComplete* message, respectively. If the MN 104A is an eNB or ng-eNB, the RRC resume request message, the RRC resume message, and the RRC resume complete message are an *RRCConnectionRelease* message, an *RRCConnectionResumeRequest* message, an *RRCConnectionResume* message, and an *RRCConnectionResumeComplete* message, respectively.

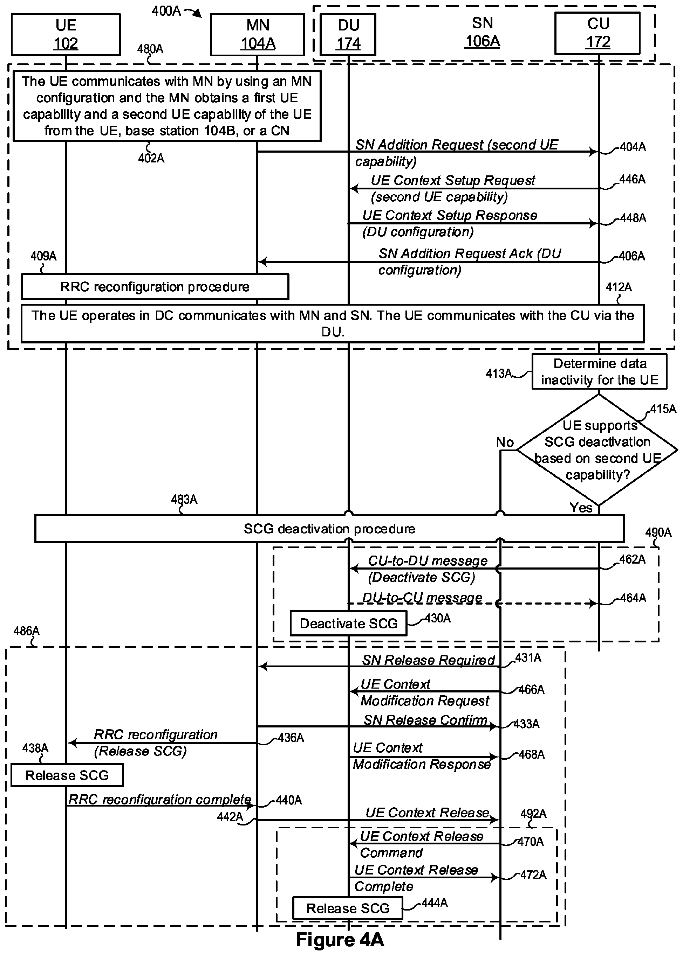

Figs. 4A-4B are generally similar to Fig. 3B, but where the SN 106A includes both a CU and a DU. Accordingly, events in the scenarios depicted in Figs. 4A-4B and similar to those discussed with respect to Fig. 3B are labeled with similar reference numbers.

Turning first to Fig. 4A, in a scenario 400A, the base station 104A operates as an MN, and the base station 106A operates as an SN that includes a CU 172 and a DU 174. Initially, the UE 102 communicates 402A with the MN 104A using an MN configuration. The MN 104A can obtain a first UE capability and a second UE capability of the UE 102 from the UE 102, another base station (e.g., the base station 104B), or a CN 110. To configure the base station 106A as an SN for the UE 102, the MN 104A sends 404A an *SN Addition Request* message including the second UE capability to the CU 172 of the SN 106A. The CU 172 can then send 446A a *UE Context Setup Request* message including the second UE capability to the DU 174. In response to the *UE Context Setup Request* message, the DU 174 transmits 448A a *UE Context Setup Response* message including a DU configuration. The DU configuration includes configuration parameters that the UE 102 can use to communicate with the DU 174. The CU 172 can transmit 406A the DU configuration to the MN 104A in an *SN Addition Request Acknowledge* message. The MN 104A can transmit the DU configuration to the UE 102 in an RRC reconfiguration procedure 409A, similar to the RRC reconfiguration procedure 309A. The UE 102 can then communicate 412A in DC with the MN 104A and the SN 106A. To communicate with the SN 106A, the UE 102 communicates with the DU 174 using the DU configuration and can communicate with the CU 172 via the DU 174.

The events 402A, 404A, 446A, 448A, 406A, 409A, and 412A are collectively referred to in Fig. 4A as a DC configuration procedure 480A.

At a later time, the CU 172 detects that a condition for deactivating the SCG is satisfied. In the scenario 400A, detecting the condition includes determining 413A that data inactivity on the SCG exists for the UE 102, similar to the determination 314A. In response to detecting the condition, the CU 172 determines 415A whether the UE 102 supports SCG deactivation based on the second UE capability. If so, then the CU 172 performs 483A an SCG deactivation procedure to cause the UE 102 to deactivate the SCG. The SCG deactivation procedure 483A can be similar to either the SCG deactivation procedure 382B or the SCG deactivation procedure 384C. The CU 172 also transmits 462A a CU-to-DU message to the DU 174 to cause the DU 174 to deactivate the SCG. In response to receiving 472 the CU-to-DU message, the DU 174 deactivates 430A the SCG. In some implementations, the DU 174 also transmits 464A a DU-to-CU message to the CU 172 in response to the CU-to-DU message.

The events 462A, 464A, and 430A are collectively referred to in this disclosure as a CU-initiated SCG deactivation procedure 490A.

If the CU 172 determines 415A that the UE 102 does not support SCG deactivation, then the CU 172 determines to release the SCG. The CU 172 transmits 431A an *SN Release Required* message to the MN 104A. In response, the MN 104A transmits 433A an *SN Release Confirm* message to the CU 172, and transmits an RRC reconfiguration message to the UE 102 that includes an indication to release the SCG. Further, after the determination 415A, the CU 172 also transmits 466A a *UE Context Modification Request* message to the DU 174 to instruct the DU 174 to stop transmitting to the UE 102. The DU 174 can acknowledge the *UE Context Modification Request* by transmitting 468A a *UE Context Modification Response* message to the CU 172.

After receiving 436A the RRC reconfiguration message, the UE 102 releases 438A the SCG and transmits 440A an RRC reconfiguration complete message to the MN 104A. The MN 104A then transmits 442A a *UE Context Release* message to the CU 172. In response, the CU 172 transmits 470A a *UE Context Release Command* message to the DU 174 to cause the DU 174 to release the SCG. The DU 174 then releases 444A the SCG and transmits 472A a *UE Context Release Complete* message to the CU 172. The events 470A, 472A, and 444A are collectively referred to in Fig. 4A as a CU-initiated SCG release procedure 492A.

In some implementations, the CU 172 can generate an SN configuration including the DU configuration and send 406A the *SN Addition Request Acknowledge* message including the SN configuration. In some implementations, the DU configuration can be a *CellGroupConfig* IE or a *ConfigPartSCG-r12* IE.

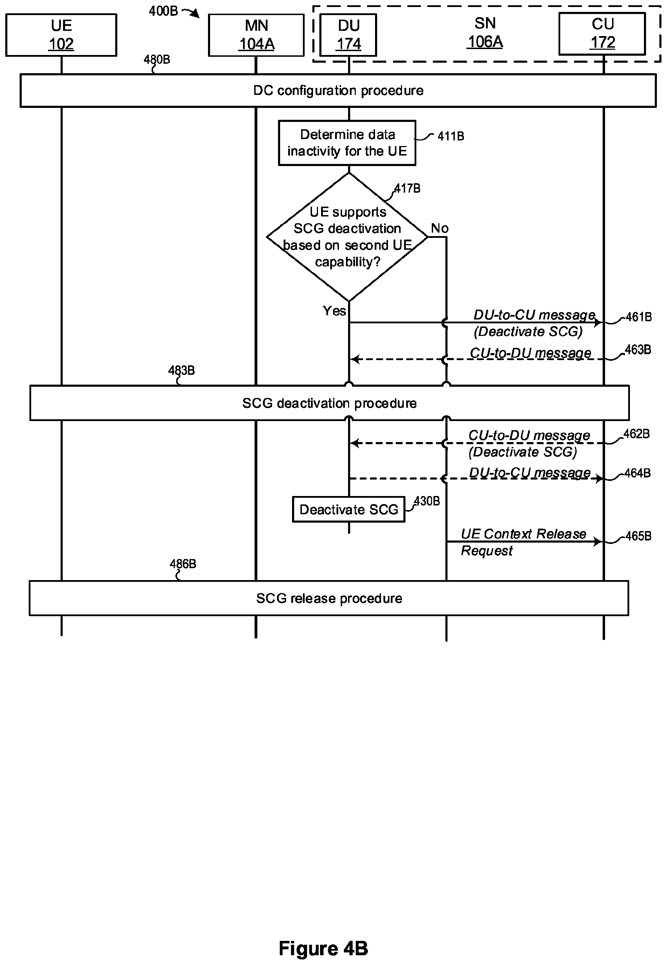

Turning to Fig. 4B, a scenario 400B is similar to the scenario 400A, but with the DU 174, rather than the CU 172, determining whether to deactivate or to release the SCG. After a DC configuration procedure 480B, the DU 174 detects that a condition for deactivating the SCG is satisfied. In the scenario 400B, the DU 174 determines 411B that data inactivity exists on the SCG for the UE 102. In response, the DU 174 determines 417B whether the UE 102 supports SCG deactivation based on the second UE capability. If so, then the DU 174 transmits 461B a DU-to-CU message to the CU 172. In some implementations, the DU-to-CU message is a request to deactivate the SCG. The CU 172 can determine whether to approve or deny the request. In such implementations, if the CU 172 approves the request, then the CU 172 (i) initiates an SCG deactivation procedure 483B to cause the UE 102 to deactivate the SCG, similar to the procedure 483A, and (ii) sends 462B a CU-to-DU message to the DU 174 including a command instructing the DU 174 to deactivate the SCG. In response, the DU 174 transmits 464B a DU-to-CU message to the CU 172 acknowledging the CU-to-DU message and deactivates 430B the SCG. In other implementations, the DU-to-CU message that the DU 174 transmits 461B includes an indication that the SCG is to be deactivated. The CU 172 can send 463B a CU-to-DU message to the DU 174 acknowledging the indication, and initiates the SCG deactivation procedure 483B to cause the UE 102 to deactivate the SCG. In such implementations, the CU 172 does not send 462B the DU-to-CU message. The DU 174 deactivates 430B the SCG after transmitting 461B the DU-to-CU message or after receiving 463B the acknowledgement from the CU 172.

If the DU 174 determines 417B that the UE 102 does not support SCG deactivation, then the DU 174 transmits 465B a *UE Context Release Request* message to the CU 172. The CU 172 can then initiate an SCG release procedure 486B to cause the UE 102 and the DU 174 to release the SCG at the UE 102 and the SN 106A, respectively.

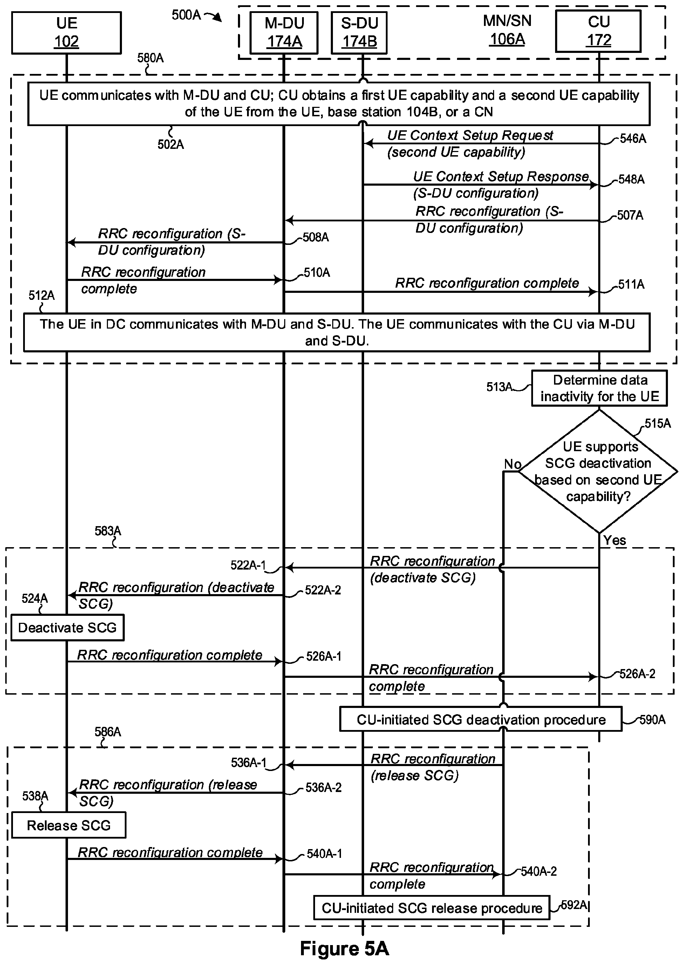

Figs. 5A-5B are generally similar to Figs. 4A-4B, respectively, but with portions of a single base station serving as the MN and the SN, but where the SN 106A includes both a CU and a DU. Accordingly, events in the scenarios depicted in Figs. 5A-5B and similar to those discussed with respect to Figs. 4A-4B are labeled with similar reference numbers.

Turning first to Fig. 5A, in a scenario 500A, the base station 106A operates as both an MN and an SN, with the MN including a CU (e.g., the CU 172) and a first DU (e.g., a DU 174A of the one or more DUs 174, referred to in Fig. 5A as a master DU (M-DU) 174A) of the base station 106A, and the SN including the same CU and a second, different DU (e.g., a DU 174B of the one or more DUs 174, referred to in Fig. 5A as a secondary (S-DU) 174B) of the base station 106A. The scenario 500A is generally similar to the scenario 400A, with the exception that the base station 106A includes the MN and the SN.

Initially, the UE 102 communicates 502A with the M-DU 174A and the CU 172. The CU 172 can obtain a first UE capability and a second UE capability of the UE 102 from the UE 102, another base station (e.g., the base station 104B), or a CN 110. To configure the SN for the UE 102, the CU 172 sends 546A a *UE Context Setup Request* message including the second UE capability to the S-DU 174B. In response to the *UE Context Setup Request* message, the S-DU 174B transmits 548A a *UE Context Setup Response* message including an S-DU configuration. The S-DU configuration includes configuration parameters that the UE 102 can use to communicate with the S-DU 174B. The CU 172 can transmit 507A the S-DU configuration to the M-DU 174A in an RRC reconfiguration message, which the M-DU 174A in turn sends 508A to the UE 102. In response, the UE 102 sends 510A an RRC reconfiguration complete message to the M-DU 174A, which the M-DU 174A in turn sends 511A to the CU 172. The UE 102 can then communicate 512A in DC with the M-DU 174A and the S-DU 174B. The UE 102 can communicate with the CU 172 via the M-DU 174A, or via the S-DU 174B using the S-DU configuration

The events 502A, 546A, 548A, 507A, 508A, 510A, 511A, and 512A are collectively referred to in Fig. 5A as a DC configuration procedure 580A.

At a later time, the CU 172 detects that a condition for deactivating the SCG is satisfied. In the scenario 500A, detecting the condition includes determining 513A that data inactivity on the SCG exists for the UE 102. In response to detecting the condition, the CU 172 determines 515A whether the UE 102 supports SCG deactivation based on the second UE capability. If so, then the CU 172 transmits 522A-1 an RRC reconfiguration message to the M-DU 174A including an indication that the UE 102 should deactivate the SCG, which the M-DU 174A transmits 522A-2 to the UE 102. In response, the UE 102 deactivates 524A the SCG and transmits 526A-1 an RRC reconfiguration complete message to the M-DU 174A, which the M-DU 174A sends 526A-2 to the CU 172. The events 522A-1, 522A-2, 524A, 526A-1, and 526A-2 are collectively referred to in Fig. 5A. The CU 172 also performs 583A an SCG deactivation procedure to cause the UE 102 to deactivate the SCG. The CU 172 also performs a CU-initiated SCG deactivation procedure 590A to cause the S-DU 174B to deactivate the SCG, similar to event 490A.

If the CU 172 determines 515A that the UE 102 does not support SCG deactivation, then the CU 172 determines to release the SCG. The CU 172 transmits 536A-1 an RRC reconfiguration message to M-DU 174A including an indication that the UE 102 should release the SCG. The M-DU 174A sends 536A-2 the RRC reconfiguration to the UE 102. In response, the UE 102 releases 538A the SCG and sends 540A-1 an RRC reconfiguration complete message to the M-DU 174A, which in turn sends 540A-2 the RRC reconfiguration complete message to the CU 172. The CU 172 also initiates a CU-initiated SCG release procedure 592A to cause the S-DU 174B to release the SCG. The events 536A-1, 536A-2, 538A, 540A-1, 540A-2, and 592A are collectively referred to in Fig. 5A as an SCG release procedure 586A.

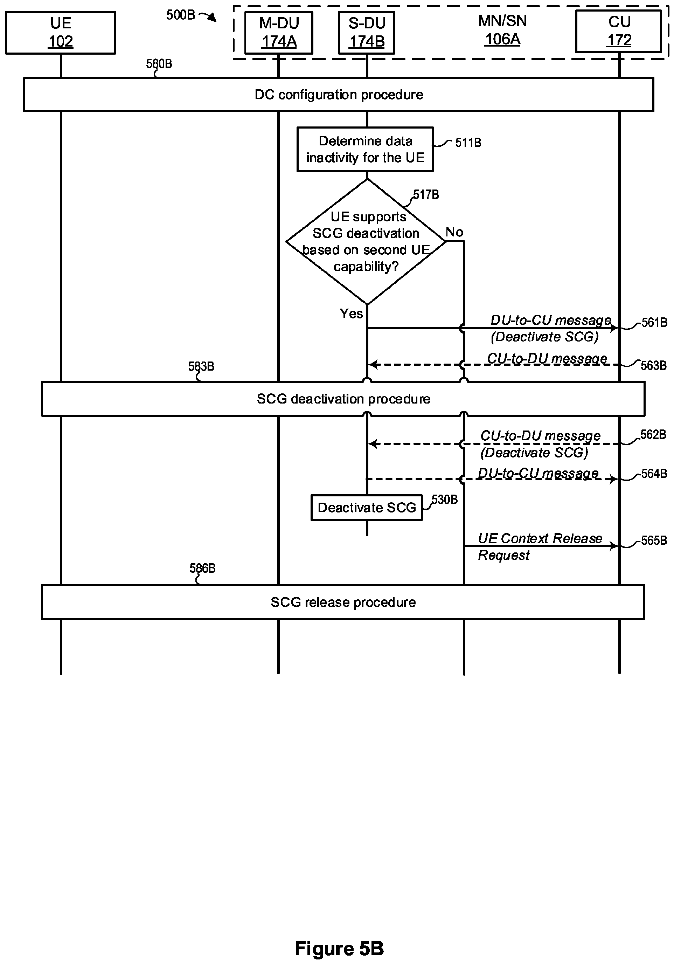

Turning to Fig. 5B, a scenario 500B is similar to the scenario 500A, but with the S-DU 174B, rather than the CU 172, determining whether to deactivate or to release the SCG. The scenario 500B is also similar to the scenario 400B, but with the base station 106A operating as both the MN and the SN.

After a DC configuration procedure 580B, the S-DU 174B detects that a condition for deactivating the SCG is satisfied. In the scenario 500B, the S-DU 174B determines 511B that data inactivity exists on the SCG for the UE 102. In response, the S-DU 174B determines 517B whether the UE 102 supports SCG deactivation based on the second UE capability. If so, then the S-DU 174B transmits 561B a DU-to-CU message to the CU 172. The events 561B, 563B, 562B, and 564B are similar to the events 461B, 463B, 462B, and 464B, respectively. Similar to the scenario 400B, the CU 172 initiates an SCG deactivation procedure 583B to cause to UE 102 to deactivate the SCG, and the S-DU 174B deactivates 530B the SCG.

If the S-DU 174B determines 517B that the UE 102 does not support SCG deactivation, then the S-DU 174B transmits 565B a *UE Context Release Request* message to the CU 172. The CU 172 can then initiate an SCG release procedure 586B to cause the UE 102 and the S-DU 174B to release the SCG at the UE 102 and the SN, respectively.

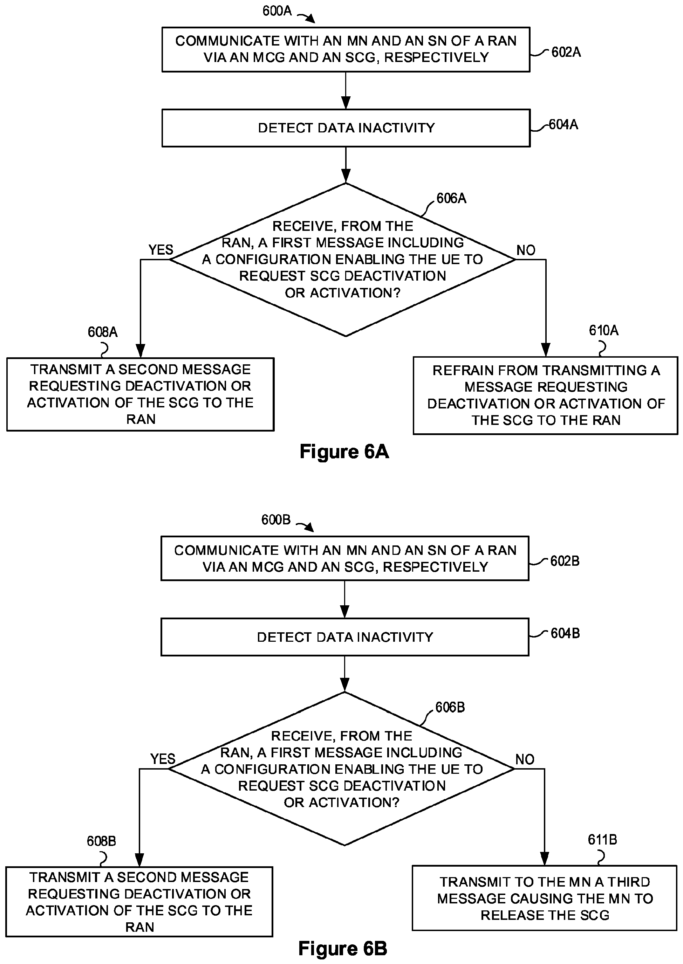

Figs. 6A-19 are flow diagrams depicting methods that a UE (e.g., the UE 102) or nodes of a RAN (e.g., the RAN 105) can perform for managing deactivation and activation of an SCG between the UE and the RAN.

Fig. 6A is a flow diagram of an example method 600A for requesting deactivation or activation of an SCG, which can be implemented in a UE (e.g., the UE 102). Initially, at block 602A, the UE communicates with an MN and an SN of a RAN (e.g., the RAN 105) via an MCG and an SCG, respectively (e.g., events 312A, 380B, 380C, 380D, 412A, 480B, 512A, 580B). At a later time, at block 604A, the UE detects that data inactivity exists on the SCG for the UE. Alternatively, if the SCG has been deactivated, the UE may detect data activity on the SCG at block 604A. At block 606A, the UE determines whether the UE has received, from the RAN, a first message including a configuration that enables the UE to request SCG deactivation (or SCG activation, if the SCG is deactivated). For example, the first message can be the RRC reconfiguration message that the UE 102 receives at the event 308A.

If the UE has received such a configuration, the UE at block 608A transmits a second message, to the RAN, to request deactivation (or activation, if the SCG is deactivated) of the SCG. The RAN can determine whether to deactivate (or activate) the SCG based on the second message. Accordingly, with reference to the messaging sequence diagrams 3A-5B, detecting the condition for deactivating the SCG can include receiving the second message. Thus, receiving the second message from the UE can trigger the RAN to determine whether to deactivate or to release the SCG. If the UE has not received a configuration that enables the UE to request SCG deactivation, the UE at block 610A refrains from transmitting the second message.

Fig. 6B is a flow diagram of an example method 600B for requesting deactivation or activation of an SCG, which can be implemented in a UE (e.g., the UE 102). The method 600B is generally similar to the method 600A. In particular, blocks 602B, 604B, 606B, and 608B are similar to blocks 602A, 604A, 606A, and 606A, respectively. If the UE determines at block 606B that the UE has not received a configuration that enables the UE to request SCG deactivation, then the UE at block 611B transmits, to the MN, a third message that causes the MN to release the SCG. For example, the third message can be an SCG Failure Information message that indicates a failure of the SCG (e.g., an *SCGFailurelnformation* message). Receiving the third message from the UE can trigger the RAN to determine to release the SCG.

Fig. 7 is a flow diagram of an example method 700 that a UE (e.g., the UE 102) can implement to inform a RAN (e.g., the RAN) whether the UE supports SCG deactivation. At block 702, the UE communicates with a RAN (e.g., events 302A, 380B, 380C, 380D, 402A, 480B, 502A, 580B). At block 704, the UE transmits, to the RAN, a first UE capability indicating support of SCG deactivation and activation, where the MN can use the first UE capability to determine whether to initiate SCG deactivation or activation for the UE. For example, if the MN is an ng-eNB or an eNB, the first UE capability can be a *UE-EUTRA-Capability* IE in a EUTRA RRC ASN.1 format that is interpretable by the MN. At block 706, the UE transmits, to the RAN, a second UE capability indicating support of SCG deactivation and activation, where the SN can use the second UE capability to determine whether to initiate SCG deactivation or activation for the UE. For example, if the SN is a gNB, the second UE capability can be a *NR-MRDC-Capability* IE or a *UE-NR-Capability* IE in a NR RRC ASN.1 format that is interpretable by the SN. In some implementations, the first and second UE capabilities can indicate explicitly whether the UE supports both SCG deactivation and activation. In other implementations, the first and second UE capabilities each indicate whether the UE supports SCG deactivation, and the RAN can determine that the UE also supports SCG activation based on the UE's support of SCG deactivation. Generally speaking, unless otherwise specified, a UE capability indicating support of SCG deactivation implies to the RAN that the UE also supports SCG activation.

In some implementations, the UE can transmit to the RAN a single message (e.g., *UECapabilityInformation* message) including the first and second UE capabilities. In other implementations, the UE can transmit to the RAN a first message (e.g., *UECapabilitylnformation* message) and a second message (e.g., *UECapabilityInformation* message) including the first UE capability and a second UE capability, respectively.

Fig. 8 is a flow diagram of an example method 800 that a UE (e.g., the UE 102) can implement to inform a RAN (e.g., the RAN 105) whether the UE supports SCG deactivation. At block 802, the UE communicates with a RAN (e.g., events 302A, 380B, 380C, 380D, 402A, 480B, 502A, 580B). At block 804, the UE transmits, to the RAN, a UE capability indicating support of SCG deactivation and activation, where both the MN and the SN can use the UE capability to determine whether to initiate SCG deactivation or activation for the UE. For example, if both the MN and the SN are gNBs, the UE capability can be a *NR-MRDC-Capability* IE or a *UE-NR-Capability* IE in a NR RRC ASN.1 format that is interpretable by both the MN and the SN. Either the MN or the SN can use the UE capability to determine whether the UE supports SCG deactivation. Accordingly, with reference to the messaging sequence diagrams 3A-5B, either the MN or the SN can use this UE capability, rather than a first or a second UE capability, to determine whether the UE supports SCG deactivation at events 314A, 315B, 315C, 316D, 415A, 417B, 515A, 517B. In some implementations, the UE can transmit to the RAN a single message (e.g., *UECapabilitylnformation* message) including the UE capability.

Fig. 9 is a flow diagram of an example method 900 that a UE (e.g., the UE 102) can implement to inform a RAN (e.g., the RAN 105) whether the UE supports SCG deactivation for different DC frequency band combinations. At block 902, the UE communicates with a RAN (e.g., events 302A, 380B, 380C, 380D, 402A, 480B, 502A, 580B). At block 904, the UE transmits, to the RAN, a UE capability indicating support of SCG deactivation and activation for particular DC band combinations. Accordingly, the UE capability indicates that the UE supports SCG deactivation when communicating in DC with the MN on a first frequency band and with the SN on a second frequency band, where the first frequency band and the second frequency band collectively define a particular DC band combination. For example, the UE capability can indicate that the UE supports SCG deactivation when communicating in DC with the MN on band 1 or n1 and with the SN on band n78. In another example, the UE capability indicates that the UE supports SCG deactivation when communicating in DC with the MN on band 2 or n2 and with the SN on band n260.

In some implementations, the UE does not support SCG deactivation when communicating in DC with the MN on a third frequency band and with the SN on a fourth frequency band. In this example, the UE capability does not indicate support for SCG deactivation in a DC band combination of the third frequency band and the fourth frequency band. In some implementations, the second frequency band is within a first frequency range and the fourth frequency band is within a second frequency range. For example, the first frequency range and second frequency range can be frequency range 1 and frequency range 2 defined in 3GPP specification 38.101.

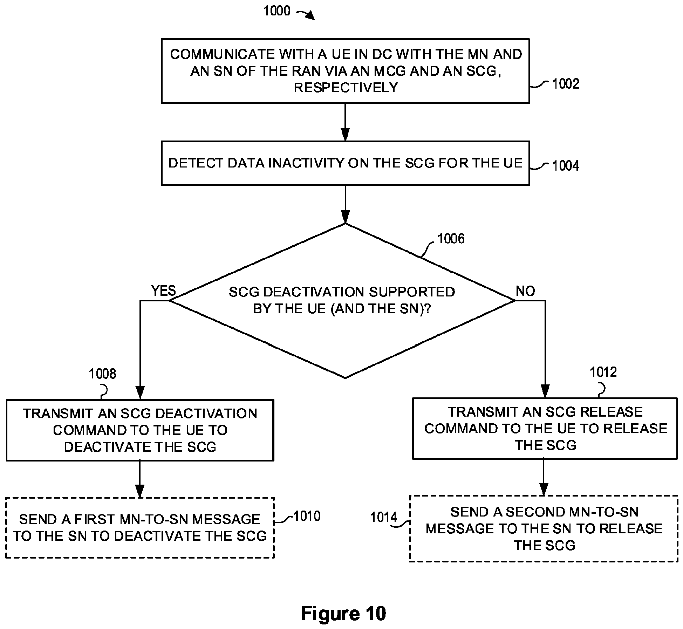

Fig. 10 is a flow diagram of an example method 1000 for determining whether to cause an SN to deactivate or release an SCG, which can be implemented by an MN (e.g., the base station 104A or 106A operating as an MN) of a RAN (e.g., the RAN 105). At block 1002, the MN communicates with a UE (e.g., the UE 102) operating in DC with the MN and an SN of the RAN via an MCG and an SCG, respectively (e.g., events 312A, 380B, 380C, 380D, 412A, 480B, 512A, 580B). At block 1004, the MN detects data inactivity on the SCG for the UE (e.g., events 314A, 313B, 313C, 413A, 411B, 513A, 511B). At block 1006, the MN determines whether the UE supports SCG deactivation (e.g., event 316A). In some implementations, the MN also determines whether the SN supports SCG deactivation. However, in most implementations, the MN does not need to explicitly check whether the SN supports SCG deactivation because the MN is aware of the SN capabilities by default.

If the UE and the SN support SCG deactivation, the MN transmits, at block 1008, an SCG deactivation command to the UE to cause the UE to deactivate the SCG at the UE (e.g., event 322A). At block 1010, the MN sends a first MN-to-SN message to the SN to cause the SN to deactivate the SCG at the SN (e.g., event 318A). If the MN and the SN are implemented within the same base station, the MN may omit transmitting the MN-to-SN message.

If either the UE or the SN do not support SCG deactivation, the MN transmits, at block 1012, an SCG release command to the UE to cause the UE to release the SCG (e.g., event 336A). At block 1014, the MN sends a second MN-to-SN message to the SN to cause the SN to release the SCG (e.g., event 332A). If the MN and the SN are implemented within the same base station, the MN may omit transmitting the MN-to-SN message.

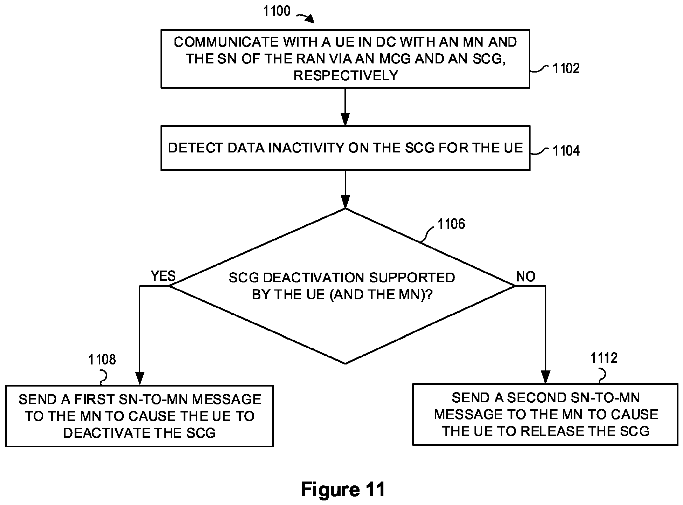

Fig. 11 is a flow diagram of an example method 1100 for determining whether to deactivate or release an SCG, which can be implemented by an SN (e.g., the base station 104A or 106A operating as an SN) of a RAN (e.g., the RAN 105). At block 1102, the SN communicates with a UE operating in DC with an MN and an SN of the RAN via an MCG and an SCG, respectively (e.g., events 312A, 380B, 380C, 380D, 412A, 480B, 512A, 580B). At block 1104, the SN detects data inactivity on the SCG for the UE (e.g., events 313B, 313C). At block 1106, the SN determines whether the UE supports SCG deactivation (e.g., events 315B, 315C). In some implementations, the SN also determines whether the MN supports SCG deactivation. However, in most implementations, the SN does not need to explicitly check whether the MN supports SCG deactivation because the SN is aware of the MN capabilities by default.

If the UE and the MN support SCG deactivation, the SN sends, at block 1108, a first SN-to-MN message to the MN (e.g., event 321B). In response, the MN transmits an SCG deactivation command to the UE to cause the UE to deactivate the SCG (e.g., event 322B). In some implementations, the SN can transmit an SCG deactivation command directly to the UE (e.g., event 323C). If either the UE or the SN do not support SCG deactivation, the SN sends, at block 1112, a second SN-to-MN message to the MN (e.g., event 331B). In response, the MN transmits an SCG release command to the UE to cause the UE to release the SCG (e.g., event 336B).

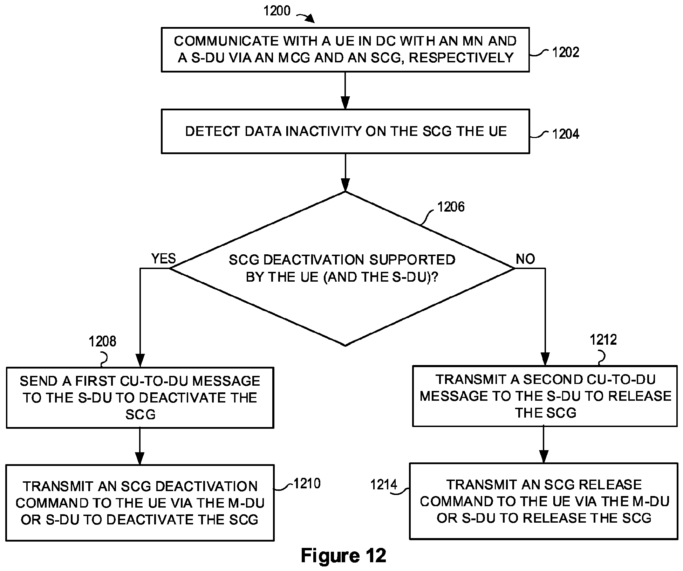

Fig. 12 is a flow diagram of an example method 1200 for determining whether to cause a DU of an SN to deactivate or release an SCG, which can be implemented by a CU (e.g., the CU 172) of an SN. At block 1202, the CU communicates with a UE operating in DC with an MN and an S-DU via an MCG and an SCG, respectively (e.g., 412A, 480B, 512A, 580B). At block 1204, the CU detects data inactivity on the SCG for the UE (e.g., events 413A, 513A). At block 1206, the CU determines whether the UE supports SCG deactivation (e.g., events 415A, 515A). In some implementations, the CU also determines whether the S-DU supports SCG deactivation.

If the UE and the S-DU support SCG deactivation, the CU sends, at block 1208, a first CU-to-DU message to the S-DU to cause the S-DU to deactivate the SCG (e.g., events 462A, 590A). At block 1210, the S-DU transmits an SCG deactivation to the UE via the M-DU or S-DU to cause the UE to deactivate the SCG (e.g., events 483A, 522A-1). If either the UE or the S-DU do not support SCG deactivation, the CU sends, at block 1212, a second CU-to-DU message to the S-DU to cause the S-DU to release the SCG (e.g., events 470A, 592A). At block 1214, the CU transmits an SCG release command to the UE via the M-DU or S-DU to cause the UE to release the SCG (e.g., events 431A, 536A-1).

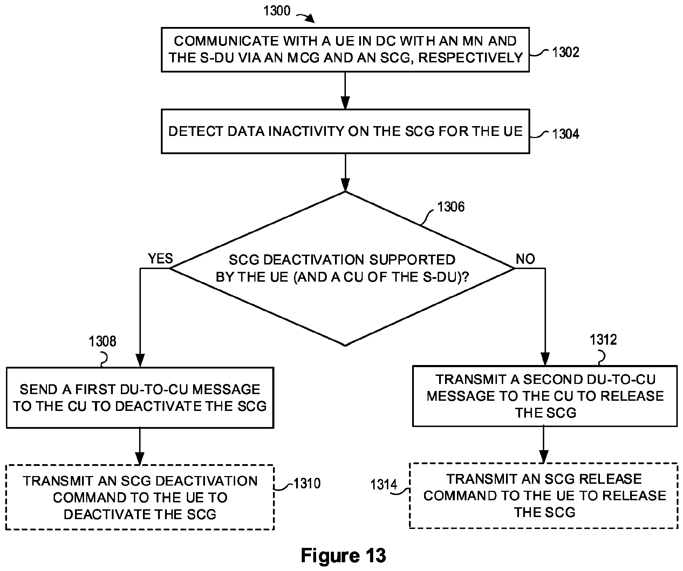

Fig. 13 is a flow diagram of an example method 1300 for determining whether to deactivate or release an SCG, which can be implemented by a DU (e.g., the DU 174) of an SN (i.e., an S-DU). At block 1302, the S-DU communicates with a UE operating in DC with an MN and the S-DU via an MCG and an SCG, respectively (e.g., 412A, 480B, 512A, 580B). At block 1304, the S-DU detects data inactivity on the SCG for the UE (e.g., events 411B, S11B). At block 1306, the S-DU determines whether the UE supports SCG deactivation (e.g., events 417B, 517B). In some implementations, the S-DU also determines whether the CU of the S-DU supports SCG deactivation.

If the UE and the CU support SCG deactivation, the S-DU sends, at block 1308, a first DU-to-CU message to the CU indicating that the SCG is to be deactivated or requesting to deactivate the SCG (e.g., events 461B, 561B). At block 1310, the S-DU may transmit an SCG deactivation command to the UE to cause the UE to deactivate the SCG. More particularly, the SCG deactivation command originates with the CU, and the S-DU may forward the SCG deactivation command to the UE. If either the UE or the CU do not support SCG deactivation, the S-DU sends, at block 1312, a second DU-to-CU message to the CU that indicates or requests to release the SCG (e.g., events 465B, 565B). At block 1314, the S-DU may transmit an SCG release command that indicates to the UE to release the SCG. More particularly, the SCG release command originates with the CU, and the S-DU may forward the SCG release command to the UE.

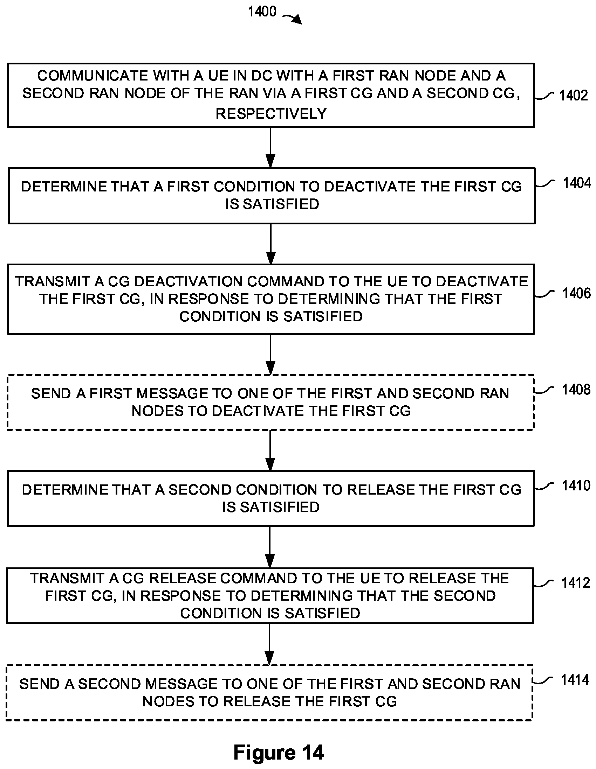

Fig. 14 is a flow diagram of an example method for deactivating and releasing a CG, which can be implemented by a RAN (e.g., the RAN 105). At block 1402, the RAN communicates with a UE (e.g., the UE 102) operating in DC with a first RAN node and a second RAN node via a first CG and a second CG, respectively. For example, the first RAN node and the second RAN node can be an MN and an SN, which communicate with the UE via an MCG and an SCG, respectively. At block 1404, the RAN determines that a first condition to deactivate the first CG is satisfied. For example, the RAN can determine that data inactivity exists on the first CG. If the UE supports deactivating the first CG, in response to determining that the first condition is satisfied, the RAN transmits a CG deactivation command to the UE to deactivate the CG at block 1406. In some implementations, the RAN enables detecting the first condition if the UE supports deactivating the first CG. If the UE does not support the UE deactivating the first CG, the RAN may not enable detecting the first condition.

In some implementations, at block 1408, a RAN node sends a first message to one of the first and second RAN nodes to deactivate the first CG. For example, if the first RAN node determines that the first condition is satisfied, the first RAN node can deactivate the first CG at the first RAN node. The first RAN node may omit sending a message to the second RAN node, or may send a message to the second RAN node to indicate that the first CG is to be deactivated or to request to deactivate the first CG. If the second RAN node determines that the first condition is satisfied, the second RAN node can send the first message to the first RAN node to cause the first RAN node to deactivate the first CG.

At block 1410, the RAN determines that a second condition to release the first CG is satisfied. In response, at block 1412, the RAN transmits a CG release command to the UE to release the first CG. In some implementations, at block 1414, a RAN node sends a second message to one of the first and second RAN nodes to release the first CG. For example, if the first RAN node determines that the second condition is satisfied, the first RAN node can release the first CG at the first RAN node. The first RAN node may omit sending a message to the second RAN node, or may send a message to the second RAN node to indicate that the first CG is to be deactivated or to request to release the first CG. If the second RAN node determines that the second condition is satisfied, the second RAN node can send the second message to the first RAN node to cause the first RAN node to release the first CG.

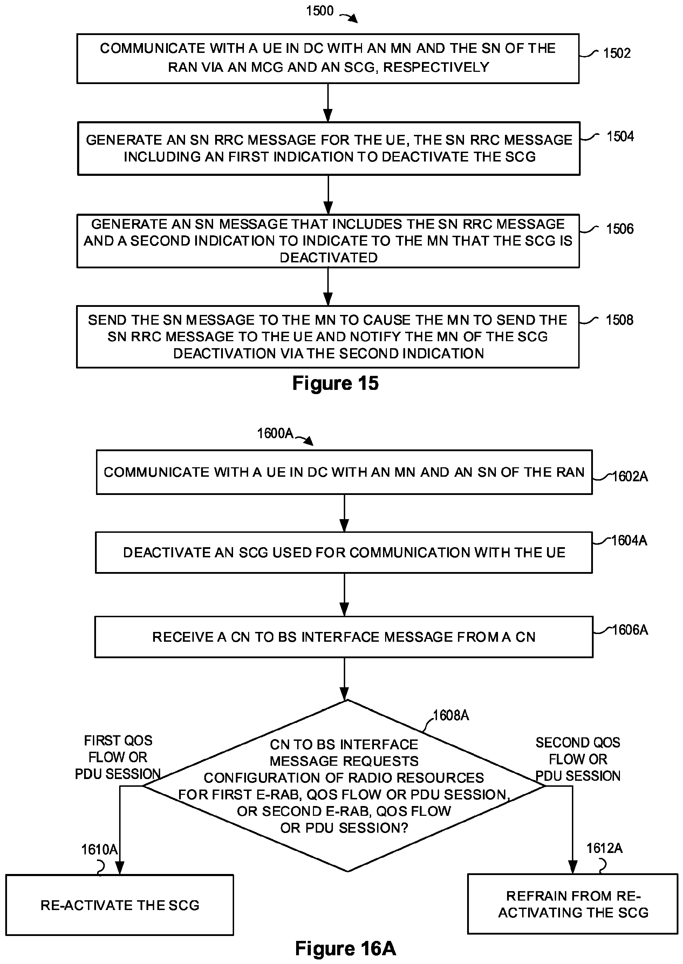

Fig. 15 is a flow diagram of an example method for deactivating an SCG, which can be implemented by an SN (e.g., the base station 106A operating as an SN). At block 1502, the SN communicates with a UE (e.g., the UE 102) operating in DC with an MN and the SN of the RAN via an MCG and an SCG, respectively (e.g., events 312A, 380B, 380C, 380D, 412A, 480B, 502A, 580B). At block 1504, the SN generates an SN RRC message for the UE, where the SN RRC message includes a first indication to deactivate the SCG for the UE. At block 1506, the SN generates an SN message that includes both the SN RRC message and a second indication to indicate to the MN that the SCG is deactivated. At block 1508, the SN sends the SN message to the MN to cause the MN to send the SN RRC message to the UE and to notify the MN of the SCG deactivation via the second indication (e.g., events 321B, 483A, 483B).

Fig. 16A is a flow diagram of an example method 1600A for determining whether to reactivate an SCG in response to a CN-to-BS interface message, which can be implemented by a RAN (e.g., the RAN 105). At block 1602A, the RAN communicates with a UE operating in DC with an MN and an SN of the RAN. At block 1604A, the RAN deactivates an SCG used for communication with the UE. At block 1606A, the RAN receives a CN-to-BS interface message from a CN (e.g., the CN 110). At block 1608A, the RAN determines whether the CN-to-BS interface message requests configuration of radio resources (i) for a first evolved radio access bearer (E-RAB), quality of service (QoS) flow, or PDU session or (ii) for a second E-RAB, QoS flow, or PDU session. The data rate of the first E-RAB, QoS flow, or PDU session can be higher than the data rate of the second E-RAB, QoS flow, or PDU session. For example, the first E-RAB, QoS flow, or PDU session can be for higher data rate services or data flows (e.g., Internet services), and the second E-RAB, QoS flow, or PDU session for be for lower data rate services or data flows (e.g., an IMS voice call).

If the CN-to-BS interface message requests configuration of radio resources for the first E-RAB, QoS flow, or PDU session, the RAN reactivates the SCG at block 1610A. Alternatively, if the CN-to-BS interface message requests configuration of radio resources for the second E-RAB, QoS flow, or PDU session, the RAN refrains from reactivating the SCG at block 1612A.

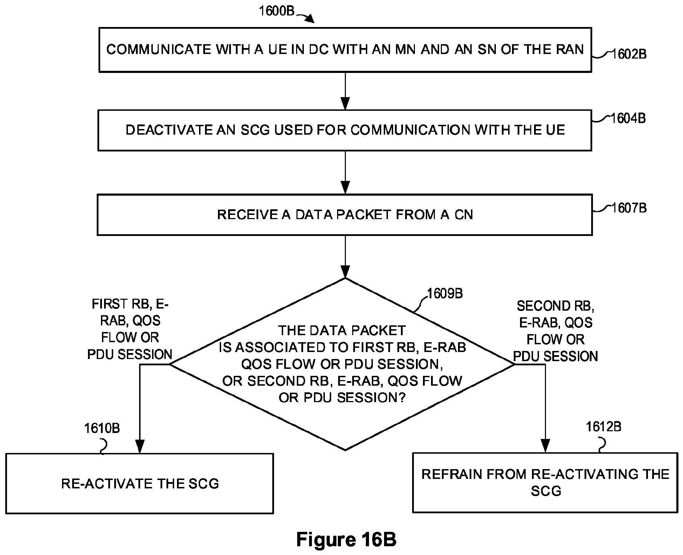

Fig. 16B is a flow diagram of an example method 1600B for determining whether to reactivate an SCG in response to a data packet, which can be implemented by a RAN (e.g., the RAN 105). In particular, blocks 1602A, 1604A, 1610A, and 1612A are similar to blocks 1602B, 1604B, 1610B, and 1612B, respectively. At block 1607B, the RAN receives a data packet from a CN (e.g., the CN 110). At block 1609B, the RAN determines whether the data packet is associated to (i) a first radio bearer (RB), E-RAB, QoS flow, or PDU session or (ii) a second RB, E-RAB, QoS flow, or PDU session. The data rate of the first RB, E-RAB, QoS flow, or PDU session can be higher than the data rate of the second RB, E-RAB, QoS flow, or PDU session. For example, the first RB, E-RAB, QoS flow, or PDU session can be for higher data rate services or data flows (e.g., Internet services), and the second RB, E-RAB, QoS flow, or PDU session for be for lower data rate services or data flows (e.g., an IMS voice call).

If the data packet is associated to the first RB, E-RAB, QoS flow, or PDU session, the RAN reactivates the SCG at block 1610B. Alternatively, if the data packet is associated to the second RB, E-RAB, QoS flow, or PDU session, the RAN refrains from reactivating the SCG at block 1612B. In some implementations the first RB and the second RB can be different types of RBs. For example, the first RB can be an SN-terminated RB and the second RB can be an MN-terminated RB. In another example, the first RB can be an SCG RB and the second RB can be an MCG RB.

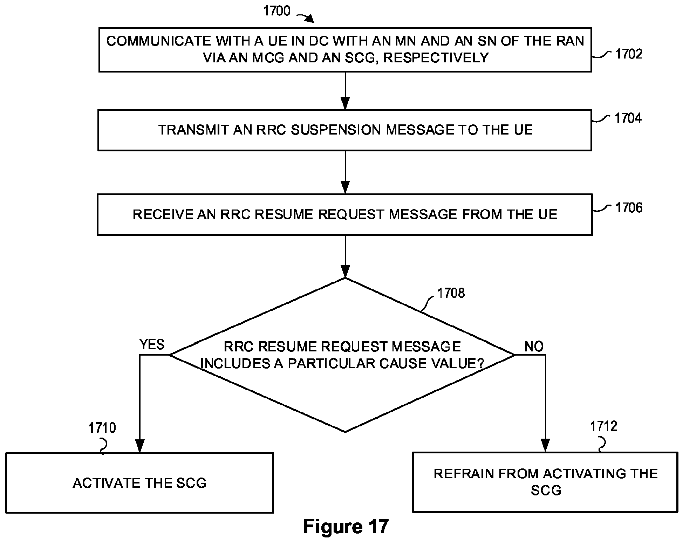

Fig. 17 is a flow diagram of an example method 1700 for determining whether to reactivate an SCG in response to an RRC resume request message, which can be implemented by an MN (e.g., the base station 104A or 106A operating as an MN). At block 1702, the MN communicates with a UE operating in DC with the MN and an SN of the RAN via an MCG and an SCG, respectively (e.g., events 312A, 380B, 380C, 380D, 412A, 480B, 512A, 580B). At block 1704, the MN transmits an RRC suspension message to the UE (e.g., event 376D). At block 1706, the MN receives an RRC resume request message from the UE (e.g., event 352D). At block 1708, the UE determines whether the RRC resume request message includes a particular cause value. If the RRC resume request message includes a particular cause value, then the MN activates the SCG at block 1710. If the RRC resume request message does not include a particular cause value, then then the MN refrains from activating the SCG at block 1712.

The cause value of the RRC resume request message indicates the trigger for the RRC resume request. Example cause values include "emergency," "highPriorityAccess," "mt-Access," "mo-Signalling," and "mo-Data." Further, different cause values may be related to procedures having different data rates. A first set of cause values having a higher data rate cause the MN to activate the SCG, while a second set of cause values having a lower data rate than the first set of cause values cause the MN to refrain from activating the SCG. For example, if the RRC resume request message includes a cause value from the first set of cause values, the MN activates the SCG at block 1710. As another example, if the RRC resume request message includes a particular cause value corresponding to mobile-originating data (e.g., mo-Data), then the MN activates the SCG at block 1710.

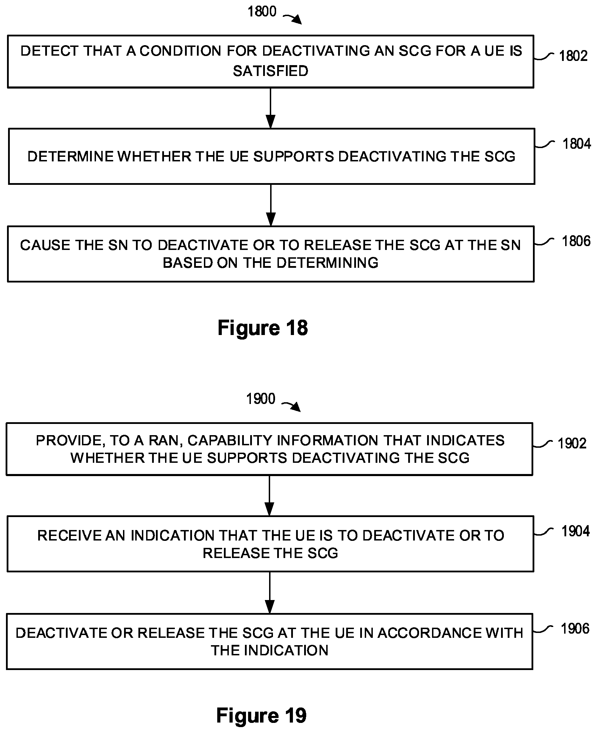

Fig. 18 is a flow diagram of an example method for managing deactivation of an SCG, which can be implemented by a network node of Figs. 1A-1C (e.g., the base station 104A, the base station 106A, the CU 172, or the DU 174). At block 1802, the network node detects that a condition for deactivating an SCG for a UE is satisfied (e.g., events 314A, 313B, 313C, 352D, 413A, 411B, 513A, 511B). At block 1804, the network node determines whether the UE supports deactivating the SCG (e.g., events 316A, 315B, 315C, 316D, 415A, 417B, 515A, 517B). At block 1806, the network node causes the SN to deactivate or to release the SCG at the SN based on the determining (e.g., events 318A, 328A, 332A, 342A, 330B, 344B, 330C, 344C, 318D, 328D, 332D, 342D, 462A, 470A, 461B, 465B, 590A, 592A, 561B, 565B).

Fig. 19 is a flow diagram of an example method for managing deactivation of an SCG, which can be implemented by a UE of Figs. 1A-1B (e.g., the UE 102). At block 1902, the UE provides, to the RAN, capability information that indicates whether the UE supports deactivating the SCG (e.g., events 302A, 380B, 380C, 380D, 402A, 480B, 502A, 580B). At block 1904, the UE receives an indication that the UE is to deactivate or to release the SCG (e.g., 322A, 336A, 322B, 336B, 323C, 386C, 354D, 337D, 483A, 436A, 483B, 486B, 552A-2, 536A-2, 583B, 586B). At block 1906, the UE deactivates or releases the SCG at the UE in accordance with the indication (e.g., events 324A, 324B, 338B, 324C, 386C, 324D, 338D, 483A, 438A. 483B, 486B, 524A, 538A, 583A, 586B.

### Additional Considerations

The following additional considerations apply to the foregoing discussion.

In some implementations, "message" is used and can be replaced by "information element (IE)". In some implementations, "IE" is used and can be replaced by "field". In some implementations, "configuration" can be replaced by "configurations" or the configuration parameters included in the MN or SN configuration described above. For example, "SN configuration" can be replaced by "SN configurations". The SN configuration can be replaced by a cell group configuration and/or radio bearer configuration. In some implementations, "deactivating an SCG" can be replaced by "suspending an SCG" and "activating an SCG" can be replaced by "resuming an SCG" or "reactivating an SCG". In some implementations, "lower layer" can be replaced by "protocol layer".

A user device in which the techniques of this disclosure can be implemented (*e*.*g*., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (*e.g.*, code, or machine-readable instructions stored on non-transitory machine-readable medium) or hardware modules. A hardware module is a tangible unit capable of performing certain operations and may be configured or arranged in a certain manner. A hardware module can include dedicated circuitry or logic that is permanently configured (*e.g.*, as a special-purpose processor, such as a field programmable gate array (FPGA) or an application-specific integrated circuit (ASIC), a digital signal processor (DSP)) to perform certain operations. A hardware module may also include programmable logic or circuitry (*e.g.*, as encompassed within a general-purpose processor or other programmable processor) that is temporarily configured by software to perform certain operations. The decision to implement a hardware module in dedicated and permanently configured circuitry, or in temporarily configured circuitry (*e*.*g*., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method in a network node of a radio access network, RAN, communicating with a user equipment, UE, (102) in dual connectivity, DC, with a master node, MN, (104A) and a secondary node, SN, (106A) for managing deactivation of a secondary cell group, SCG, the method comprising:
detecting, by the network node, that a condition for deactivating the SCG is satisfied;
determining whether the UE supports deactivating the SCG; and
causing the SN to deactivate or to release the SCG at the SN based on the determining.

2. The method of claim 1, wherein:
the determining includes determining that the UE (102) supports deactivating the SCG; and
the causing includes causing the SN (106A) to deactivate the SCG.

3. The method of claim 1, wherein:
the determining includes determining the UE (102) does not support deactivating the SCG; and
the causing includes causing the SN (106A) to release the SCG.

4. The method of any one of the preceding claims, further comprising:
based on the determining, transmitting, to the UE (102), an indication that the UE is to deactivate or release the SCG.

5. The method of any one of the preceding claims, further comprising:
obtaining capability information of the UE (102),
wherein the determining is based on the capability information.

6. The method of claim 5, wherein obtaining the capability information includes:
obtaining the capability information formatted in accordance with a radio access technology, RAT, supported by the network node.

7. The method of claim 6, wherein:
the capability information is first capability information;
the RAT is a first RAT;
the method further comprises obtaining second capability information formatted in accordance with a second RAT, which is different from the first RAT; and
the determining includes determining, in view of the first capability information and regardless of the second capability information, whether the UE (102) supports deactivating the SCG.

8. The method of claim 7, wherein:
the network node is the MN (104A); and
the method further comprises:
providing, to the SN (106A), the second capability information.

9. The method of claim 5 or 6, wherein:
the network node is the SN (106A); and
obtaining the capability information includes receiving the capability information from the MN (104A).

10. A network node of a radio access network, RAN, including processing hardware and configured to implement a method according to any one of the preceding claims.

11. A method in a user equipment, UE, (102) communicating in dual connectivity, DC, with a radio access network, RAN, via a master node, MN, (104A) and a secondary node, SN, (106A) for managing deactivation and activation of a secondary cell group, SCG, the method comprising:
providing, by the UE to the RAN, capability information that indicates whether the UE supports deactivating the SCG, the providing including:
providing first capability information formatted in accordance with a first RAT supported by the MN (104A) and providing second capability information formatted in accordance with a second RAT supported by the SN (106A);
receiving, from the RAN, an indication that the UE is to deactivate or to release the SCG; and
deactivating or releasing the SCG at the UE in accordance with the indication.

12. The method of claim 11, wherein providing the capability information includes:
providing the capability information indicating whether the UE (102) supports deactivating the SCG for a particular DC frequency band combination.

13. The method of claim 11 or 12, wherein providing the capability information includes:
providing the capability information indicating that the UE (102) does not support deactivating the SCG, wherein:
receiving the indication includes receiving an indication that the UE is to release the SCG; and
deactivating or releasing the SCG includes releasing the SCG.

14. The method of claim 11 or 12, wherein providing the capability information includes:
providing the capability information indicating that the UE (102) supports deactivating the SCG, wherein:
receiving the indication includes receiving an indication that the UE is to deactivate the SCG; and
deactivating or releasing the SCG includes deactivating the SCG.

15. A user equipment, UE, (102) including processing hardware and configured to implement a method according to any one of claims 11-14.

## Patentansprüche

1. Verfahren in einem Netzknoten eines Funkzugangsnetzes, RAN, das mit einem Benutzergerät, UE, (102) in dualer Konnektivität, DC, mit einem Hauptknoten, MN, (104A) und einem Nebenknoten, SN, (106A) kommuniziert, um eine Deaktivierung einer sekundären Zellengruppe, SCG, zu verwalten, wobei das Verfahren Folgendes umfasst:
Erkennen, dass eine Bedingung für das Deaktivieren der SCG erfüllt ist, durch den Netzknoten;
Bestimmen, ob das UE das Deaktivieren der SCG unterstützt; und
Veranlassen des SN zum Deaktivieren oder Freigeben der SCG am SN basierend auf dem Bestimmen.

2. Verfahren nach Anspruch 1, wobei:
das Bestimmen das Bestimmen einschließt, dass das UE (102) das Deaktivieren der SCG unterstützt; und
das Veranlassen das Veranlassen des SN (106A) einschließt, die SCG zu deaktivieren.

3. Verfahren nach Anspruch 1, wobei:
das Bestimmen das Bestimmen einschließt, dass das UE (102) das Deaktivieren der SCG nicht unterstützt; und
das Veranlassen das Veranlassen des SN (106A) einschließt, die SCG freizugeben.

4. Verfahren nach einem der vorstehenden Ansprüche, ferner Folgendes umfassend:
basierend auf dem Bestimmen, Übermitteln einer Angabe an das UE (102), , dass das UE die SCG zu deaktivieren oder freizugeben hat.

5. Verfahren nach einem der vorstehenden Ansprüche, ferner Folgendes umfassend:
Erhalten von Fähigkeitsinformationen des UE (102),
wobei das Bestimmen auf den Fähigkeitsinformationen basiert.

6. Verfahren nach Anspruch 5, wobei das Erhalten der Fähigkeitsinformationen Folgendes einschließt:
Erhalten der Fähigkeitsinformationen, die in Übereinstimmung mit einer vom Netzknoten unterstützten Funkzugangstechnologie, RAT, formatiert sind.

7. Verfahren nach Anspruch 6, wobei:
die Fähigkeitsinformationen erste Fähigkeitsinformationen sind;
die RAT eine erste RAT ist;
das Verfahren ferner das Erhalten von zweiten Fähigkeitsinformationen umfasst, die in Übereinstimmung mit einer zweiten RAT formatiert sind, die sich von der ersten RAT unterscheidet; und
das Bestimmen das Bestimmen angesichts der ersten Fähigkeitsinformationen und unabhängig von den zweiten Fähigkeitsinformationen, ob das UE (102) das Deaktivieren der SCG unterstützt, einschließt.

8. Verfahren nach Anspruch 7, wobei:
der Netzknoten der MN (104A) ist; und
das Verfahren ferner Folgendes umfasst:
Bereitstellen der zweiten Fähigkeitsinformationen für den SN (106A).

9. Verfahren nach Anspruch 5 oder 6, wobei:
der Netzknoten der SN (106A) ist; und
das Erhalten der Fähigkeitsinformationen das Empfangen der Fähigkeitsinformationen vom MN (104A) einschließt.

10. Netzknoten eines Funkzugangsnetzes, RAN, der Verarbeitungshardware einschließt und zum Implementieren eines Verfahrens nach einem der vorstehenden Ansprüche konfiguriert ist.

11. Verfahren in einem Benutzergerät, UE (102), das in dualer Konnektivität, DC, mit einem Funkzugangsnetz, RAN, über einen Hauptknoten, MN, (104A) und einen Nebenknoten, SN, (106A) kommuniziert, um eine Deaktivierung und eine Aktivierung einer sekundären Zellengruppe, SCG, zu verwalten, wobei das Verfahren Folgendes umfasst:
Bereitstellen von Fähigkeitsinformationen durch das UE für das RAN, die angeben, ob das UE das Deaktivieren der SCG unterstützt, wobei das Bereitstellen Folgendes einschließt:
Bereitstellen von ersten Fähigkeitsinformationen, die in Übereinstimmung mit einer ersten RAT formatiert sind, die vom MN (104A) unterstützt wird, und Bereitstellen von zweiten Fähigkeitsinformationen, die in Übereinstimmung mit einer zweiten RAT formatiert sind, die vom SN (106A) unterstützt wird;
Empfangen einer Angabe vom RAN, dass das UE die SCG zu deaktivieren oder freizugeben hat; und
Deaktivieren oder Freigeben der SCG am UE in Übereinstimmung mit der Angabe.

12. Verfahren nach Anspruch 11, wobei das Bereitstellen der Fähigkeitsinformationen Folgendes einschließt:
Bereitstellen der Fähigkeitsinformationen, die angeben, ob das UE (102) das Deaktivieren der SCG für eine bestimmte DC-Frequenzbandkombination unterstützt.

13. Verfahren nach Anspruch 11 oder 12, wobei das Bereitstellen der Fähigkeitsinformationen Folgendes einschließt:
Bereitstellen der Fähigkeitsinformationen, die angeben, dass das UE (102) das Deaktivieren der SCG nicht unterstützt, wobei:
das Empfangen der Angabe das Empfangen einer Angabe einschließt, dass das UE die SCG freizugeben hat; und
das Deaktivieren oder Freigeben der SCG das Freigeben der SCG einschließt.

14. Verfahren nach Anspruch 11 oder 12, wobei das Bereitstellen der Fähigkeitsinformationen Folgendes einschließt:
Bereitstellen der Fähigkeitsinformationen, die angeben, dass das UE (102) das Deaktivieren der SCG unterstützt, wobei:
das Empfangen der Angabe das Empfangen einer Angabe einschließt, dass das UE die SCG zu deaktivieren hat; und
das Deaktivieren oder Freigeben der SCG das Deaktivieren der SCG einschließt.

15. Benutzergerät, UE, (102), das Verarbeitungshardware einschließt und zum Implementieren eines Verfahrens nach einem der Ansprüche 11 bis 14 konfiguriert ist.

## Revendications

1. Procédé dans un noeud de réseau d'un réseau d'accès radio, RAN, communiquant avec un équipement utilisateur, UE, (102) en double connectivité, DC, avec un noeud maître, MN, (104A) et un noeud secondaire, SN, (106A) pour gérer une désactivation d'un groupe cellulaire secondaire, SCG, le procédé comprenant :
le fait de détecter, par le noeud de réseau, qu'une condition pour désactiver le SCG est satisfaite ;
le fait de déterminer si l'UE supporte ou ne supporte pas la désactivation du SCG ; et
le fait d'amener le SN à désactiver ou à libérer le SCG au niveau du SN sur la base du fait de déterminer.

2. Procédé selon la revendication 1, dans lequel :
le fait de déterminer inclut le fait de déterminer que l'UE (102) supporte la désactivation du SCG ; et
le fait d'amener inclut le fait d'amener le SN (106A) à désactiver le SCG.

3. Procédé selon la revendication 1, dans lequel :
le fait de déterminer inclut le fait de déterminer que l'UE (102) ne supporte pas la désactivation du SCG ; et
le fait d'amener inclut le fait d'amener le SN (106A) à libérer le SCG.

4. Procédé selon l'une quelconque des revendications précédentes, comprenant en outre :
sur la base du fait de déterminer, la transmission, à l'UE (102), d'une indication que l'UE doit désactiver ou libérer le SCG.

5. Procédé selon l'une quelconque des revendications précédentes, comprenant en outre :
l'obtention d'informations de capacité de l'UE (102),
dans lequel le fait de déterminer est basé sur les informations de capacité.

6. Procédé selon la revendication 5, dans lequel l'obtention des informations de capacité inclut :
l'obtention des informations de capacité formatées conformément à une technologie d'accès radio, RAT, supportée par le noeud de réseau.

7. Procédé selon la revendication 6, dans lequel :
les informations de capacité sont des premières informations de capacité ;
la RAT est une première RAT ;
le procédé comprend en outre l'obtention de secondes informations de capacité formatées conformément à une seconde RAT, qui est différente de la première RAT ; et
le fait de déterminer inclut le fait de déterminer, au vu des premières informations de capacité et indépendamment des secondes informations de capacité, si l'UE (102) supporte ou ne supporte pas la désactivation du SCG.

8. Procédé selon la revendication 7, dans lequel :
le noeud de réseau est le MN (104A) ; et
le procédé comprend en outre :
la fourniture, au SN (106A), des secondes informations de capacité.

9. Procédé selon la revendication 5 ou 6, dans lequel :
le noeud de réseau est le SN (106A) ; et
l'obtention des informations de capacité inclut la réception des informations de capacité en provenance du MN (104A).

10. Noeud de réseau d'un réseau d'accès radio, RAN, incluant du matériel de traitement et étant configuré pour mettre en oeuvre un procédé selon l'une quelconque des revendications précédentes.

11. Procédé dans un équipement utilisateur, UE, (102) communiquant en double connectivité, DC, avec un réseau d'accès radio, RAN, *via* un noeud maître, MN, (104A) et un noeud secondaire, SN, (106A) pour gérer une désactivation et une activation d'un groupe cellulaire secondaire, SCG, le procédé comprenant :
la fourniture, par l'UE au RAN, d'informations de capacité qui indiquent si l'UE supporte ou ne supporte pas la désactivation du SCG, la fourniture incluant :
la fourniture de premières informations de capacité formatées conformément à une première RAT supportée par le MN (104A) et la fourniture de secondes informations de capacité formatées conformément à une seconde RAT supportée par le SN (106A) ;
la réception, en provenance du RAN, d'une indication que l'UE doit désactiver ou libérer le SCG ; et
la désactivation ou la libération du SCG au niveau de l'UE conformément à l'indication.

12. Procédé selon la revendication 11, dans lequel la fourniture des informations de capacité inclut :
la fourniture des informations de capacité indiquant si l'UE (102) supporte ou ne supporte pas la désactivation du SCG pour une combinaison particulière de bandes de fréquences DC.

13. Procédé selon la revendication 11 ou 12, dans lequel la fourniture des informations de capacité inclut :
la fourniture des informations de capacité indiquant que l'UE (102) ne supporte pas la désactivation du SCG, dans lequel :
la réception de l'indication inclut la réception d'une indication que l'UE doit libérer le SCG ; et
la désactivation ou la libération du SCG inclut la libération du SCG.

14. Procédé selon la revendication 11 ou 12, dans lequel la fourniture des informations de capacité inclut :
la fourniture des informations de capacité indiquant que l'UE (102) supporte la désactivation du SCG, dans lequel :
la réception de l'indication inclut la réception d'une indication que l'UE doit désactiver le SCG ; et
la désactivation ou la libération du SCG inclut la désactivation du SCG.

15. Équipement utilisateur, UE, (102) incluant du matériel de traitement et étant configuré pour mettre en oeuvre un procédé selon l'une quelconque des revendications 11 à 14.
